(19) Europäisches Patentamt
European Patent Office
Office européen des brevets

(11) **EP 4 423 583 B1**

(12) **EUROPEAN PATENT SPECIFICATION**

(45) Date of publication and mention
of the grant of the patent:
**10.06.2026 Bulletin 2026/24**

(21) Application number: **22888231.2**

(22) Date of filing: **28.10.2022**

(51) International Patent Classification (IPC):
**G05D 1/243** *(2024.01)*    **G05D 1/246** *(2024.01)*
**G05D 1/689** *(2024.01)*    **G01S 17/89** *(2020.01)*
**G05D 1/224** *(2024.01)*

(52) Cooperative Patent Classification (CPC):
**G05D 1/2246; G05D 1/243; G05D 1/2467;**
**G05D 1/689;** G05D 2105/10; G05D 2105/93;
G05D 2107/67; G05D 2109/10; G05D 2111/10

(86) International application number:
**PCT/US2022/048195**

(87) International publication number:
**WO 2023/076576 (04.05.2023 Gazette 2023/18)**

(54) **SYSTEMS AND METHODS FOR AUTOMATIC ROUTE GENERATION FOR ROBOTIC DEVICES**

SYSTEME UND VERFAHREN ZUR AUTOMATISCHEN ROUTENERZEUGUNG FÜR ROBOTERVORRICHTUNGEN

SYSTÈMES ET PROCÉDÉS DE GÉNÉRATION AUTOMATIQUE D'ITINÉRAIRE POUR DISPOSITIFS ROBOTIQUES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.10.2021 US 202163273584 P**

(43) Date of publication of application:
**04.09.2024 Bulletin 2024/36**

(73) Proprietor: **Brain Corporation
San Diego, CA 92121 (US)**

(72) Inventor: **SARAIYA, Vishaal, Samir
San Diego, CA 92121 (US)**

(74) Representative: **Oak & Fox
18-20, rue du Faubourg du Temple
75011 Paris (FR)**

(56) References cited:
WO-A1-2022/246180    CN-A- 110 281 236
US-A1- 2020 225 673    US-A1- 2021 018 912
US-A1- 2021 018 912

## Description

Background

**Technological Field**

CN110281236A discloses a mobile robot and safety monitoring method thereof. US2021/0018912A1 discloses a robot management system. The present application relates generally to robotics, and more specifically to systems and methods for automatic route generation for robotic devices.

Summary

The foregoing needs are satisfied by the present disclosure, which provides for, *inter alia*, systems and methods for automatic route generation for robotic devices, as defined in the claims.

Exemplary embodiments described herein have innovative features, no single one of which is indispensable or solely responsible for their desirable attributes. Without limiting the scope of the claims, some of the advantageous features will now be summarized. One skilled in the art would appreciate that as used herein, the term robot may generally be referred to autonomous vehicle or object that travels a route, executes a task, or otherwise moves automatically upon executing or processing computer readable instructions.

According to at least one non-limiting exemplary embodiment, a system for configuring a robot to scan for features in an environment is disclosed. The system, comprises: a server in communications with at least one robot and at least one user device; a processor configured to execute computer readable instructions to: provide a computer readable map produced by a robot to the at least one user device; receive at least one annotation to a respective object on the map, the annotations define at least in part functions of the robot at certain locations on the computer readable map, the annotations to the computer readable map produce an annotated map; communicate the annotated map to the robot; and navigate a route in accordance with the functions defined by the at least one respective annotation.

According to at least one non-limiting exemplary embodiment, at least one annotation comprises a region on the map, a semantic label, and one or more functional constraint.

According to at least one non-limiting exemplary embodiment, each annotated object comprises at least one face identification ("ID") corresponding to a face of the object to be scanned for features.

According to at least one non-limiting exemplary embodiment, the one or more functional constraints comprise preferred scanning segments, the preferred scanning segments are portions of navigable path for the robot to follow while scanning for features.

According to at least one non-limiting exemplary embodiment, the processor is further configured to receive a plurality of face ID's from either the user device or robot; identify corresponding preferred scanning segments for each face ID; and generate a route encompassing the corresponding preferred scanning segments for the plurality of face ID's selected by connecting the preferred scanning segments.

According to at least one non-limiting exemplary embodiment, the processor is further configured to constrain the route generation based on a directional requirement for scanning, the directional requirement indicates the direction along the preferred scanning segment the robot must navigate along.

According to at least one non-limiting exemplary embodiment, the processor is further configured to correspond the images captured with a location of the robot on the computer readable map and annotation information, wherein, the robot captures a plurality of images of the annotated objects while navigating the route; and the robot uploads the images and location information to the server after navigating the route.

According to at least one non-limiting exemplary embodiment, the processor may represent a plurality of processors of a distributed network or cloud server.

These and other objects, features, and characteristics of the present disclosure, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the disclosure. As used in the specification and in the claims, the singular form of "a", "an", and "the" include plural referents unless the context clearly dictates otherwise.

Brief Description of the Drawings

The disclosed aspects will hereinafter be described in conjunction with the appended drawings, provided to illustrate and not to limit the disclosed aspects, wherein like designations denote like elements.

FIG. 1A is a functional block diagram of a robot in accordance with some embodiments of this disclosure.
FIG. 1B is a functional block diagram of a controller or processor in accordance with some embodiments of this disclosure.
FIG. 2 is a functional block diagram of a server in accordance with some embodiments of this disclosure.
FIG. 3 illustrates a neural network according to an exemplary embodiment.
FIG. 4 illustrates a robot comprising a scanning device, according to an exemplary embodiment.
FIGS. 5A-B illustrate annotating of a computer readable map, according to an exemplary embodiment.
FIG. 5C illustrates two dialogue boxes used to receive user input to provide annotation settings, according to an exemplary embodiment.
FIG. 6A illustrates an interface for a user to select one or more departments to be scanned, according to an exemplary embodiment.
FIG. 6B(i-ii) illustrates an interface for a user to select one or more departments to be scanned, according to an exemplary embodiment.
FIG. 7 illustrates a route generated by a robot in response to user selections of one or more departments to be scanned for features, according to an exemplary embodiment.
FIG. 8 is a process flow diagram illustrating a method for a controller of a robot to generate a scanning route, according to an exemplary embodiment.
FIG. 9 is a process flow diagram illustrating a method for a controller to generate a route after receiving a user input selecting one or more departments to be scanned, according to an exemplary embodiment.

All Figures disclosed herein are © Copyright 2022 Brain Corporation. All rights reserved.

Detailed Description

Currently, robots may learn routes to execute in various ways. In some embodiments, a user may demonstrate a route for the robot to execute via operating the robot in a manual or semi-autonomous mode. For example, the robot may be driven along a path and record its motions such that the path may be recreated autonomously. In some embodiments, routes are drawn on maps. In some embodiments, routes are downloaded from a preexisting file. **In** all of these methods, the routes are fixed and may include one or more redundant operations. For example, a cleaning robot may execute a predetermined route causing it to clean an area which was recently cleaned by another robot or human, thereby wasting time. Accordingly, there is a need in the art to generate routes for robots which enable the robots to navigate to desired areas and skip undesired areas.
Various aspects of the novel systems, apparatuses, and methods disclosed herein are described more fully hereinafter with reference to the accompanying drawings.
The scope of the disclosure is defined by the appended claims and equivalents thereof.
The present disclosure provides for systems and methods for automatic route generation for robotic devices. As used herein, a robot may include mechanical and/or virtual entities configured to carry out a complex series of tasks or actions autonomously. In some exemplary embodiments, robots may be machines that are guided and/or instructed by computer programs and/or electronic circuitry. In some exemplary embodiments, robots may include electro-mechanical components that are configured for navigation, where the robot may move from one location to another. Such robots may include autonomous and/or semi-autonomous cars, floor cleaners, rovers, drones, planes, boats, carts, trams, wheelchairs, industrial equipment, stocking machines, mobile platforms, personal transportation devices (e.g., hover boards, SEGWAY® vehicles, etc.), trailer movers, vehicles, and the like. Robots may also include any autonomous and/or semi-autonomous machine for transporting items, people, animals, cargo, freight, objects, luggage, and/or anything desirable from one location to another.
As used herein, a robot scanning for features includes the robot capturing sensory data, such as images, videos, LiDAR measurements/scans, temperature measurements, pressure measurements, Wi-Fi/LTE connectivity strength, and/or other exteroceptive sensor data of objects such that features of the objects are depicted and identified. Identification of the features within the captured images may be performed in real time or at a later time than the robot captures the images (e.g., in batches). The identification may be performed either by processors of the robot or processors of an external computing entity, such as a server as will be discussed in more detail below.

As used herein, a feature may comprise one or more numeric values (e.g., floating point, decimal, a tensor of values, etc.) characterizing an input or output from a sensor unit including, but not limited to, detection of an object (e.g., humans, shelving units, couches, cars, cats etc. represented in point clouds, RGB images, etc.), parameters of the object (e.g., size, shape color, orientation, edges, etc.), color values of pixels of an image, depth values of pixels of a depth image, brightness of an image, the image as a whole, changes of features over time (e.g., velocity, trajectory, etc. of an object), sounds, spectral energy of a spectrum bandwidth, motor feedback (i.e., encoder values), sensor values (e.g., gyroscope, accelerometer, GPS, magnetometer, etc. readings), a binary categorical variable, an enumerated type, a character/string, or any other characteristic of a sensory input or output. A feature may be abstracted to any level, for example, an item on a shelf may be a feature of the shelf, the shelf may be a feature of a store, the store may be a feature of a city, and so forth, wherein each of these features may be characterized by data collected by a sensor. The systems and methods herein are applicable for a wide range of abstractions based on the specific features to be sensed and identified.

As used herein, network interfaces may include any signal, data, or software interface with a component, network, or process including, without limitation, those of the FireWire (e.g., FW400, FW800, FWS800T, FWS1600, FWS3200, etc.), universal serial bus ("USB") (e.g., USB 1.X, USB 2.0, USB 3.0, USB Type-C, etc.), Ethernet (e.g., 10/100, 10/100/1000 (Gigabit Ethernet), 10-Gig-E, etc.), multimedia over coax alliance technology ("MoCA"), Coaxsys (e.g., TVNET™), radio frequency tuner (e.g., in-band or OOB, cable modem, etc.), Wi-Fi (802.11), WiMAX (e.g., WiMAX (802.16)), PAN (e.g., PAN/802.15), cellular (e.g., 3G, 4G, or 5G including LTE/LTE-A/TD-LTE/TD-LTE, GSM, etc. variants thereof), IrDA families, etc. As used herein, Wi-Fi may include one or more of IEEE-Std. 802.11, variants of IEEE-Std. 802.11, standards related to IEEE-Std. 802.11 (e.g., 802.11 a/b/g/n/ac/ad/af/ah/ai/aj/aq/ax/ay), and/or other wireless standards.

As used herein, processor, microprocessor, and/or digital processor may include any type of digital processing device such as, without limitation, digital signal processors ("DSPs"), reduced instruction set computers ("RISC"), complex instruction set computers ("CISC") processors, microprocessors, gate arrays (e.g., field programmable gate arrays ("FPGAs")), programmable logic device ("PLDs"), reconfigurable computer fabrics ("RCFs"), array processors, secure microprocessors, and application-specific integrated circuits ("ASICs"). Such digital processors may be contained on a single unitary integrated circuit die or distributed across multiple components.

As used herein, computer program and/or software may include any sequence or human or machine cognizable steps which perform a function. Such computer program and/or software may be rendered in any programming language or environment including, for example, C/C++, C#, Fortran, COBOL, MATLAB™, PASCAL, GO, RUST, SCALA, Python, assembly language, markup languages (e.g., HTML, SGML, XML, VoXML), and the like, as well as object-oriented environments such as the Common Object Request Broker Architecture ("CORBA"), JAVA™ (including J2ME, Java Beans, etc.), Binary Runtime Environment (e.g., "BREW"), and the like.

As used herein, connection, link, and/or wireless link may include a causal link between any two or more entities (whether physical or logical/virtual), which enables information exchange between the entities.

As used herein, computer and/or computing device may include, but are not limited to, personal computers ("PCs") and minicomputers, whether desktop, laptop, or otherwise, mainframe computers, workstations, servers, personal digital assistants ("PDAs"), handheld computers, embedded computers, programmable logic devices, personal communicators, tablet computers, mobile devices, portable navigation aids, J2ME equipped devices, cellular telephones, smart phones, personal integrated communication or entertainment devices, and/or any other device capable of executing a set of instructions and processing an incoming data signal.

Detailed descriptions of the various embodiments of the system and methods of the disclosure are now provided. While many examples discussed herein may refer to specific exemplary embodiments, it will be appreciated that the described systems and methods contained herein are applicable to any kind of robot. Myriad other embodiments or uses for the technology described herein would be readily envisaged by those having ordinary skill in the art, given the contents of the present disclosure.

Advantageously, the systems and methods of this disclosure at least: (i) reduce time required to train a new route for a robot; (ii) enable operators to configure unique task-oriented routes; and (iii) allow remote robot operators to generate paths for robots from a remote location. Other advantages are readily discernable by one having ordinary skill in the art given the contents of the present disclosure.

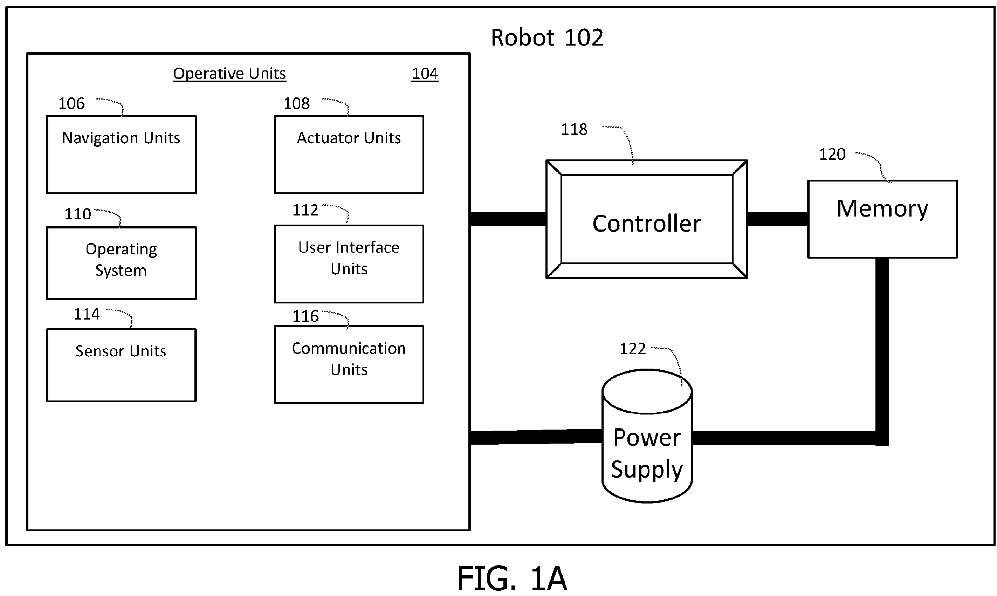

FIG. 1A is a functional block diagram of a robot 102 in accordance with some principles of this disclosure. As illustrated in FIG. 1A, robot 102 may include controller 118, memory 120, user interface unit 112, sensor units 114, navigation units 106, actuator unit 108, and communications unit 116, as well as other components and subcomponents (e.g., some of which may not be illustrated). Although a specific embodiment is illustrated in FIG. 1A, it is appreciated that the architecture may be varied in certain embodiments as would be readily apparent to one of ordinary skill given the contents of the present disclosure. As used herein, robot 102 may be representative at least in part of any robot described in this disclosure.

Controller 118 may control the various operations performed by robot 102. Controller 118 may include and/or comprise one or more processors (e.g., microprocessors) and other peripherals. As previously mentioned and used herein, processor, microprocessor, and/or digital processor may include any type of digital processor such as, without limitation, digital signal processors ("DSPs"), reduced instruction set computers ("RISC"), complex instruction set computers ("CISC"), microprocessors, gate arrays (e.g., field programmable gate arrays ("FPGAs")), programmable logic device ("PLDs"), reconfigurable computer fabrics ("RCFs"), array processors, secure microprocessors and application-specific integrated circuits ("ASICs"). Peripherals may include hardware accelerators configured to perform a specific function using hardware elements such as, without limitation, encryption/description hardware, algebraic processors (e.g., tensor processing units, quadradic problem solvers, multipliers, etc.), data compressors, encoders, arithmetic logic units ("ALU"), and the like. Such digital processors may be contained on a single unitary integrated circuit die, or distributed across multiple components.

Controller 118 may be operatively and/or communicatively coupled to memory 120. Memory 120 may include any type of integrated circuit or other storage device configured to store digital data including, without limitation, read-only memory ("ROM"), random access memory ("RAM"), non-volatile random access memory ("NVRAM"), programmable read-only memory ("PROM"), electrically erasable programmable read-only memory ("EEPROM"), dynamic random-access memory ("DRAM"), Mobile DRAM, synchronous DRAM ("SDRAM"), double data rate SDRAM ("DDR/2 SDRAM"), extended data output ("EDO") RAM, fast page mode RAM ("FPM"), reduced latency DRAM ("RLDRAM"), static RAM ("SRAM"), flash memory (e.g., NAND/NOR), memristor memory, pseudostatic RAM ("PSRAM"), etc. Memory 120 may provide computer-readable instructions and data to controller 118. For example, memory 120 may be a non-transitory, computer-readable storage apparatus and/or medium having a plurality of instructions stored thereon, the instructions being executable by a processing apparatus (e.g., controller 118) to operate robot 102. In some cases, the computer-readable instructions may be configured to, when executed by the processing apparatus, cause the processing apparatus to perform the various methods, features, and/or functionality described in this disclosure. Accordingly, controller 118 may perform logical and/or arithmetic operations based on program instructions stored within memory 120. In some cases, the instructions and/or data of memory 120 may be stored in a combination of hardware, some located locally within robot 102, and some located remote from robot 102 (e.g., in a cloud, server, network, etc.).

It should be readily apparent to one of ordinary skill in the art that a processor may be internal to or on board robot 102 and/or may be external to robot 102 and be communicatively coupled to controller 118 of robot 102 utilizing communications unit 116 wherein the external processor may receive data from robot 102, process the data, and transmit computer-readable instructions back to controller 118. In at least one non-limiting exemplary embodiment, the processor may be on a remote server (not shown).

In some exemplary embodiments, memory 120, shown in FIG. 1A, may store a library of sensor data. In some cases, the sensor data may be associated at least in part with objects and/or people. In exemplary embodiments, this library may include sensor data related to objects and/or people in different conditions, such as sensor data related to objects and/or people with different compositions (e.g., materials, reflective properties, molecular makeup, etc.), different lighting conditions, angles, sizes, distances, clarity (e.g., blurred, obstructed/occluded, partially off frame, etc.), colors, surroundings, and/or other conditions. The sensor data in the library may be taken by a sensor (e.g., a sensor of sensor units 114 or any other sensor) and/or generated automatically, such as with a computer program that is configured to generate/simulate (e.g., in a virtual world) library sensor data (e.g., which may generate/simulate these library data entirely digitally and/or beginning from actual sensor data) from different lighting conditions, angles, sizes, distances, clarity (e.g., blurred, obstructed/occluded, partially off frame, etc.), colors, surroundings, and/or other conditions. The number of images in the library may depend at least in part on one or more of the amount of available data, the variability of the surrounding environment in which robot 102 operates, the complexity of objects and/or people, the variability in appearance of objects, physical properties of robots, the characteristics of the sensors, and/or the amount of available storage space (e.g., in the library, memory 120, and/or local or remote storage). In exemplary embodiments, at least a portion of the library may be stored on a network (e.g., cloud, server, distributed network, etc.) and/or may not be stored completely within memory 120. As yet another exemplary embodiment, various robots (e.g., that are commonly associated, such as robots by a common manufacturer, user, network, etc.) may be networked so that data captured by individual robots are collectively shared with other robots. In such a fashion, these robots may be configured to learn and/or share sensor data in order to facilitate the ability to readily detect and/or identify errors and/or assist events.

Still referring to FIG. 1A, operative units 104 may be coupled to controller 118, or any other controller, to perform the various operations described in this disclosure. One, more, or none of the modules in operative units 104 may be included in some embodiments. Throughout this disclosure, reference may be to various controllers and/or processors. In some embodiments, a single controller (e.g., controller 118) may serve as the various controllers and/or processors described. In other embodiments different controllers and/or processors may be used, such as controllers and/or processors used particularly for one or more operative units 104. Controller 118 may send and/or receive signals, such as power signals, status signals, data signals, electrical signals, and/or any other desirable signals, including discrete and analog signals to operative units 104. Controller 118 may coordinate and/or manage operative units 104, and/or set timings (e.g., synchronously or asynchronously), turn off/on control power budgets, receive/send network instructions and/or updates, update firmware, send interrogatory signals, receive and/or send statuses, and/or perform any operations for running features of robot 102.

Returning to FIG. 1A, operative units 104 may include various units that perform functions for robot 102. For example, operative units 104 includes at least navigation units 106, actuator units 108, user interface units 112, sensor units 114, and communications unit 116. Operative units 104 may also comprise other units such as specifically configured task units (not shown) that provide the various functionalities of robot 102. In exemplary embodiments, operative units 104 may be instantiated in software, hardware, or both software and hardware. For example, in some cases, units of operative units 104 may comprise computer implemented instructions executed by a controller. In exemplary embodiments, units of operative unit 104 may comprise hardcoded logic (e.g., ASICS). In exemplary embodiments, units of operative units 104 may comprise both computer-implemented instructions executed by a controller and hardcoded logic. Where operative units 104 are implemented in part in software, operative units 104 may include units/modules of code configured to provide one or more functionalities.

In exemplary embodiments, navigation units 106 may include systems and methods that may computationally construct and update a map of an environment, localize robot 102 (e.g., find its position) in a map, and navigate robot 102 to/from destinations. The mapping may be performed by imposing data obtained in part by sensor units 114 into a computer-readable map representative at least in part of the environment. In exemplary embodiments, a map of an environment may be uploaded to robot 102 through user interface units 112, uploaded wirelessly or through wired connection, or taught to robot 102 by a user.

In exemplary embodiments, navigation units 106 may include components and/or software configured to provide directional instructions for robot 102 to navigate. Navigation units 106 may process maps, routes, and localization information generated by mapping and localization units, data from sensor units 114, and/or other operative units 104.

Still referring to FIG. 1A, actuator units 108 may include actuators such as electric motors, gas motors, driven magnet systems, solenoid/ratchet systems, piezoelectric systems (e.g., inchworm motors), magnetostrictive elements, gesticulation, and/or any way of driving an actuator known in the art. By way of illustration, such actuators may actuate the wheels for robot 102 to navigate a route; navigate around obstacles; or repose cameras and sensors. According to exemplary embodiments, actuator unit 108 may include systems that allow movement of robot 102, such as motorize propulsion. For example, motorized propulsion may move robot 102 in a forward or backward direction, and/or be used at least in part in turning robot 102 (e.g., left, right, and/or any other direction). By way of illustration, actuator unit 108 may control if robot 102 is moving or is stopped and/or allow robot 102 to navigate from one location to another location.

Actuator unit 108 may also include any system used for actuating and, in some cases actuating task units to perform tasks. For example, actuator unit 108 may include driven magnet systems, motors/engines (e.g., electric motors, combustion engines, steam engines, and/or any type of motor/engine known in the art), solenoid/ratchet system, piezoelectric system (e.g., an inchworm motor), magnetostrictive elements, gesticulation, and/or any actuator known in the art.

According to exemplary embodiments, sensor units 114 may comprise systems and/or methods that may detect characteristics within and/or around robot 102. Sensor units 114 may comprise a plurality and/or a combination of sensors. Sensor units 114 may include sensors that are internal to robot 102 or external, and/or have components that are partially internal and/or partially external. In some cases, sensor units 114 may include one or more exteroceptive sensors, such as sonars, light detection and ranging ("LiDAR") sensors, radars, lasers, cameras (including video cameras (e.g., red-blue-green ("RBG") cameras, infrared cameras, three-dimensional ("3D") cameras, thermal cameras, etc.), time of flight ("ToF") cameras, structured light cameras, etc.), antennas, motion detectors, microphones, and/or any other sensor known in the art. According to some exemplary embodiments, sensor units 114 may collect raw measurements (e.g., currents, voltages, resistances, gate logic, etc.) and/or transformed measurements (e.g., distances, angles, detected points in obstacles, etc.). In some cases, measurements may be aggregated and/or summarized. Sensor units 114 may generate data based at least in part on distance or height measurements. Such data may be stored in data structures, such as matrices, arrays, queues, lists, arrays, stacks, bags, etc.

According to exemplary embodiments, sensor units 114 may include sensors that may measure internal characteristics of robot 102. For example, sensor units 114 may measure temperature, power levels, statuses, and/or any characteristic of robot 102. In some cases, sensor units 114 may be configured to determine the odometry of robot 102. For example, sensor units 114 may include proprioceptive sensors, which may comprise sensors such as accelerometers, inertial measurement units ("IMU"), odometers, gyroscopes, speedometers, cameras (e.g. using visual odometry), clock/timer, and the like. Odometry may facilitate autonomous navigation and/or autonomous actions of robot 102. This odometry may include robot 102's position (e.g., where position may include robot's location, displacement and/or orientation, and may sometimes be interchangeable with the term pose as used herein) relative to the initial location. Such data may be stored in data structures, such as matrices, arrays, queues, lists, arrays, stacks, bags, etc. According to exemplary embodiments, the data structure of the sensor data may be called an image.

According to exemplary embodiments, sensor units 114 may be in part external to the robot 102 and coupled to communications unit 116. For example, a security camera within an environment of a robot 102 may provide a controller 118 of the robot 102 with a video feed via wired or wireless communication channel(s). In some instances, sensor units 114 may include sensors configured to detect a presence of an object at a location such as, for example without limitation, a pressure or motion sensor may be disposed at a shopping cart storage location of a grocery store, wherein the controller 118 of the robot 102 may utilize data from the pressure or motion sensor to determine if the robot 102 should retrieve more shopping carts for customers.

According to exemplary embodiments, user interface units 112 may be configured to enable a user to interact with robot 102. For example, user interface units 112 may include touch panels, buttons, keypads/keyboards, ports (e.g., universal serial bus ("USB"), digital visual interface ("DVI"), Display Port, E-Sata, Firewire, PS/2, Serial, VGA, SCSI, audioport, high-definition multimedia interface ("HDMI"), personal computer memory card international association ("PCMCIA") ports, memory card ports (e.g., secure digital ("SD") and miniSD), and/or ports for computer-readable medium), mice, rollerballs, consoles, vibrators, audio transducers, and/or any interface for a user to input and/or receive data and/or commands, whether coupled wirelessly or through wires. Users may interact through voice commands or gestures. User interface units 218 may include a display, such as, without limitation, liquid crystal display ("LCDs"), light-emitting diode ("LED") displays, LED LCD displays, in-plane-switching ("IPS") displays, cathode ray tubes, plasma displays, high definition ("HD") panels, 4K displays, retina displays, organic LED displays, touchscreens, surfaces, canvases, and/or any displays, televisions, monitors, panels, and/or devices known in the art for visual presentation. According to exemplary embodiments user interface units 112 may be positioned on the body of robot 102. According to exemplary embodiments, user interface units 112 may be positioned away from the body of robot 102 but may be communicatively coupled to robot 102 (e.g., via communication units including transmitters, receivers, and/or transceivers) directly or indirectly (e.g., through a network, server, and/or a cloud). According to exemplary embodiments, user interface units 112 may include one or more projections of images on a surface (e.g., the floor) proximally located to the robot, e.g., to provide information to the occupant or to people around the robot. The information could be the direction of future movement of the robot, such as an indication of moving forward, left, right, back, at an angle, and/or any other direction. In some cases, such information may utilize arrows, colors, symbols, etc.

According to exemplary embodiments, communications unit 116 may include one or more receivers, transmitters, and/or transceivers. Communications unit 116 may be configured to send/receive a transmission protocol, such as BLUETOOTH®, ZIGBEE®, Wi-Fi, induction wireless data transmission, radio frequencies, radio transmission, radio-frequency identification ("RFID"), near-field communication ("NFC"), infrared, network interfaces, cellular technologies such as 3G (3.5G, 3.75G, 3GPP/3GPP2/HSPA+), 4G (4GPP/4GPP2/LTE/LTE-TDD/LTE-FDD), 5G (5GPP/5GPP2), or 5G LTE (long-term evolution, and variants thereof including LTE-A, LTE-U, LTE-A Pro, etc.), high-speed downlink packet access ("HSDPA"), high-speed uplink packet access ("HSUPA"), time division multiple access ("TDMA"), code division multiple access ("CDMA") (e.g., IS-95A, wideband code division multiple access ("WCDMA"), etc.), frequency hopping spread spectrum ("FHSS"), direct sequence spread spectrum ("DSSS"), global system for mobile communication ("GSM"), Personal Area Network ("PAN") (e.g., PAN/802.15), worldwide interoperability for microwave access ("WiMAX"), 802.20, long term evolution ("LTE") (e.g., LTE/LTE-A), time division LTE ("TD-LTE"), global system for mobile communication ("GSM"), narrowband/frequency-division multiple access ("FDMA"), orthogonal frequency-division multiplexing ("OFDM"), analog cellular, cellular digital packet data ("CDPD"), satellite systems, millimeter wave or microwave systems, acoustic, infrared (e.g., infrared data association ("IrDA")), and/or any other form of wireless data transmission.

Communications unit 116 may also be configured to send/receive signals utilizing a transmission protocol over wired connections, such as any cable that has a signal line and ground. For example, such cables may include Ethernet cables, coaxial cables, Universal Serial Bus ("USB"), FireWire, and/or any connection known in the art. Such protocols may be used by communications unit 116 to communicate to external systems, such as computers, smart phones, tablets, data capture systems, mobile telecommunications networks, clouds, servers, or the like. Communications unit 116 may be configured to send and receive signals comprising numbers, letters, alphanumeric characters, and/or symbols. In some cases, signals may be encrypted, using algorithms such as 128-bit or 256-bit keys and/or other encryption algorithms complying with standards such as the Advanced Encryption Standard ("AES"), RSA, Data Encryption Standard ("DES"), Triple DES, and the like. Communications unit 116 may be configured to send and receive statuses, commands, and other data/information. For example, communications unit 116 may communicate with a user operator to allow the user to control robot 102. Communications unit 116 may communicate with a server/network (e.g., a network) in order to allow robot 102 to send data, statuses, commands, and other communications to the server. The server may also be communicatively coupled to computer(s) and/or device(s) that may be used to monitor and/or control robot 102 remotely. Communications unit 116 may also receive updates (e.g., firmware or data updates), data, statuses, commands, and other communications from a server for robot 102.

In exemplary embodiments, operating system 110 may be configured to manage memory 120, controller 118, power supply 122, modules in operative units 104, and/or any software, hardware, and/or features of robot 102. For example, and without limitation, operating system 110 may include device drivers to manage hardware recourses for robot 102.

In exemplary embodiments, power supply 122 may include one or more batteries, including, without limitation, lithium, lithium ion, nickel-cadmium, nickel-metal hydride, nickel-hydrogen, carbon-zinc, silver-oxide, zinc-carbon, zinc-air, mercury oxide, alkaline, or any other type of battery known in the art. Certain batteries may be rechargeable, such as wirelessly (e.g., by resonant circuit and/or a resonant tank circuit) and/or plugging into an external power source. Power supply 122 may also be any supplier of energy, including wall sockets and electronic devices that convert solar, wind, water, nuclear, hydrogen, gasoline, natural gas, fossil fuels, mechanical energy, steam, and/or any power source into electricity.

One or more of the units described with respect to FIG. 1A (including memory 120, controller 118, sensor units 114, user interface unit 112, actuator unit 108, communications unit 116, mapping and localization unit 126, and/or other units) may be integrated onto robot 102, such as in an integrated system. However, according to some exemplary embodiments, one or more of these units may be part of an attachable module. This module may be attached to an existing apparatus to automate so that it behaves as a robot. Accordingly, the features described in this disclosure with reference to robot 102 may be instantiated in a module that may be attached to an existing apparatus and/or integrated onto robot 102 in an integrated system. Moreover, in some cases, a person having ordinary skill in the art would appreciate from the contents of this disclosure that at least a portion of the features described in this disclosure may also be run remotely, such as in a cloud, network, and/or server.

As used herein, a robot 102, a controller 118, or any other controller, processor, or robot performing a task, operation or transformation illustrated in the figures below comprises a controller executing computer readable instructions stored on a non-transitory computer readable storage apparatus, such as memory 120, as would be appreciated by one skilled in the art.

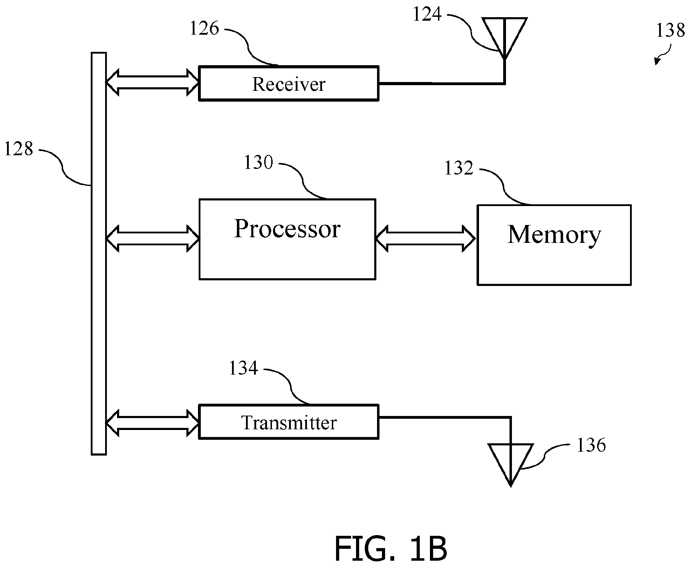

Next referring to FIG. 1B, the architecture of a processor or processing device 138 is illustrated according to an exemplary embodiment. As illustrated in FIG. 1B, the processing device 138 includes a data bus 128, a receiver 126, a transmitter 134, at least one processor 130, and a memory 132. The receiver 126, the processor 130 and the transmitter 134 all communicate with each other via the data bus 128. The processor 130 is configurable to access the memory 132, which stores computer code or computer readable instructions in order for the processor 130 to execute the specialized algorithms. As illustrated in FIG. 1B, memory 132 may comprise some, none, different, or all of the features of memory 120 previously illustrated in FIG. 1A. The algorithms executed by the processor 130 are discussed in further detail below. The receiver 126 as shown in FIG. 1B is configurable to receive input signals 124. The input signals 124 may comprise signals from a plurality of operative units 104 illustrated in FIG. 1A including, but not limited to, sensor data from sensor units 114, user inputs, motor feedback, external communication signals (e.g., from a remote server), and/or any other signal from an operative unit 104 requiring further processing. The receiver 126 communicates these received signals to the processor 130 via the data bus 128. As one skilled in the art would appreciate, the data bus 128 is the means of communication between the different components-receiver, processor, and transmitter-in the processing device. The processor 130 executes the algorithms, as discussed below, by accessing specialized computer-readable instructions from the memory 132. Further detailed description as to the processor 130 executing the specialized algorithms in receiving, processing and transmitting of these signals is discussed above with respect to FIG. 1A. The memory 132 is a storage medium for storing computer code or instructions. The storage medium may include optical memory (e.g., CD, DVD, HD-DVD, Blu-Ray Disc, etc.), semiconductor memory (e.g., RAM, EPROM, EEPROM, etc.), and/or magnetic memory (e.g., hard-disk drive, floppy-disk drive, tape drive, MRAM, etc.), among others. Storage medium may include volatile, nonvolatile, dynamic, static, read/write, read-only, random-access, sequential-access, location-addressable, file-addressable, and/or content-addressable devices. The processor 130 may communicate output signals to transmitter 134 via data bus 128 as illustrated. The transmitter 134 may be configurable to further communicate the output signals to a plurality of operative units 104 illustrated by signal output 136.

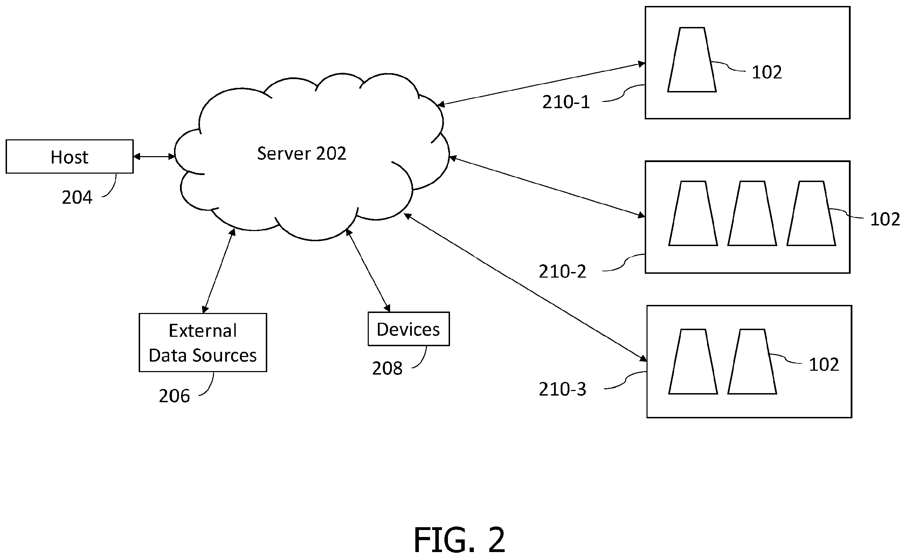

One of ordinary skill in the art would appreciate that the architecture illustrated in FIG. 1B may also illustrate an external server architecture configurable to effectuate the control of a robotic apparatus from a remote location, such as server 202 illustrated next in FIG. 2. That is, the server may also include a data bus, a receiver, a transmitter, a processor, and a memory that stores specialized computer readable instructions thereon.

One of ordinary skill in the art would appreciate that a controller 118 of a robot 102 may include one or more processing devices 138 and may further include other peripheral devices used for processing information, such as ASICS, DPS, proportional-integral-derivative ("PID") controllers, hardware accelerators (e.g., encryption/decryption hardware), and/or other peripherals (e.g., analog to digital converters) described above in FIG. 1A. The other peripheral devices when instantiated in hardware are commonly used within the art to accelerate specific tasks (e.g., multiplication, encryption, etc.) which may alternatively be performed using the system architecture of FIG. 1B. **In** some instances, peripheral devices are used as a means for intercommunication between the controller 118 and operative units 104 (e.g., digital to analog converters and/or amplifiers for producing actuator signals). Accordingly, as used herein, the controller 118 executing computer readable instructions to perform a function may include one or more processing devices 138 thereof executing computer readable instructions and, in some instances, the use of any hardware peripherals known within the art. Controller 118 may be illustrative of various processing devices 138 and peripherals integrated into a single circuit die or distributed to various locations of the robot 102 which receive, process, and output information to/from operative units 104 of the robot 102 to effectuate control of the robot 102 in accordance with instructions stored in a memory 120, 132. For example, controller 118 may include a plurality of processing devices 138 for performing high level tasks (e.g., planning a route to avoid obstacles) and processing devices 138 for performing low-level tasks (e.g., producing actuator signals in accordance with the route).

FIG. 2 illustrates a server 202 and communicatively coupled components thereof in accordance with some exemplary embodiments of this disclosure. The server 202 may comprise one or more processing units depicted in FIG. 1B above, each processing unit comprising at least one processor 130 and memory 132 therein in addition to, without limitation, any other components illustrated in FIG. 1B. The processing units may be centralized at a location or distributed among a plurality of devices (e.g., a cloud server or dedicated server). Communication links between the server 202 and coupled devices may comprise wireless and/or wired communications, wherein the server 202 may further comprise one or more coupled antenna to effectuate the wireless communication. The server 202 may be coupled to a host 204, wherein the host 204 may correspond to a high-level entity (e.g., an admin) of the server 202. The host 204 may, for example, upload software and/or firmware updates for the server 202 and/or coupled devices 208 and 210, connect or disconnect devices 208 and 210 to the server 202, or otherwise control operations of the server 202. External data sources 206 may comprise any publicly available data sources (e.g., public databases such as weather data from the national oceanic and atmospheric administration (NOAA), satellite topology data, public records, etc.) and/or any other databases (e.g., private databases with paid or restricted access) of which the server 202 may access data therein. Devices 208 may comprise any device configured to perform a task at an edge of the server 202. These devices may include, without limitation, internet of things (IoT) devices (e.g., stationary CCTV cameras, smart locks, smart thermostats, etc.), external processors (e.g., external CPUs or GPUs), and/or external memories configured to receive and execute a sequence of computer readable instructions, which may be provided at least in part by the server 202, and/or store large amounts of data.

Lastly, the server 202 may be coupled to a plurality of robot networks 210, each robot network 210 comprising a local network of at least one robot 102. Each separate network 210 may comprise one or more robots 102 operating within separate environments from each other. An environment may comprise, for example, a section of a building (e.g., a floor or room) or any space in which the robots 102 operate. Each robot network 210 may comprise a different number of robots 102 and/or may comprise different types of robot 102. For example, network 210-2 may comprise a scrubber robot 102, vacuum robot 102, and a gripper arm robot 102, whereas network 210-1 may only comprise a robotic wheelchair, wherein network 210-2 may operate within a retail store while network 210-1 may operate in a home of an owner of the robotic wheelchair or a hospital. Each robot network 210 may communicate data including, but not limited to, sensor data (e.g., RGB images captured, LiDAR scan points, network signal strength data from sensors 202, etc.), IMU data, navigation and route data (e.g., which routes were navigated), localization data of objects within each respective environment, and metadata associated with the sensor, IMU, navigation, and localization data. Each robot 102 within each network 210 may receive communication from the server 202 including, but not limited to, a command to navigate to a specified area, a command to perform a specified task, a request to collect a specified set of data, a sequence of computer readable instructions to be executed on respective controllers 118 of the robots 102, software updates, and/or firmware updates. One skilled in the art may appreciate that a server 202 may be further coupled to additional relays and/or routers to effectuate communication between the host 204, external data sources 206, edge devices 208, and robot networks 210 which have been omitted for clarity. It is further appreciated that a server 202 may not exist as a single hardware entity, rather may be illustrative of a distributed network of non-transitory memories and processors.

According to at least one non-limiting exemplary embodiment, each robot network 210 may comprise additional processing units as depicted in FIG. 1B above and act as a relay between individual robots 102 within each robot network 210 and the server 202. For example, each robot network 210 may represent a plurality of robots 102 coupled to a single Wi-Fi signal, wherein the robot network 210 may comprise in part a router or relay configurable to communicate data to and from the individual robots 102 and server 202. That is, each individual robot 102 is not limited to being directly coupled to the server 202 and devices 206, 208.

One skilled in the art may appreciate that any determination or calculation described herein may comprise one or more processors of the server 202, edge devices 208, and/or robots 102 of networks 210 performing the determination or calculation by executing computer readable instructions. The instructions may be executed by a processor of the server 202 and/or may be communicated to robot networks 210 and/or edge devices 208 for execution on their respective controllers/processors in part or in entirety (e.g., a robot 102 may calculate a coverage map using measurements 308 collected by itself or another robot 102). Advantageously, use of a centralized server 202 may enhance a speed at which parameters may be measured, analyzed, and/or calculated by executing the calculations (i.e., computer readable instructions) on a distributed network of processors on robots 102 and devices 208. Use of a distributed network of controllers 118 of robots 102 may further enhance functionality of the robots 102 as the robots 102 may execute instructions on their respective controllers 118 during times when the robots 102 are not in use by operators of the robots 102.

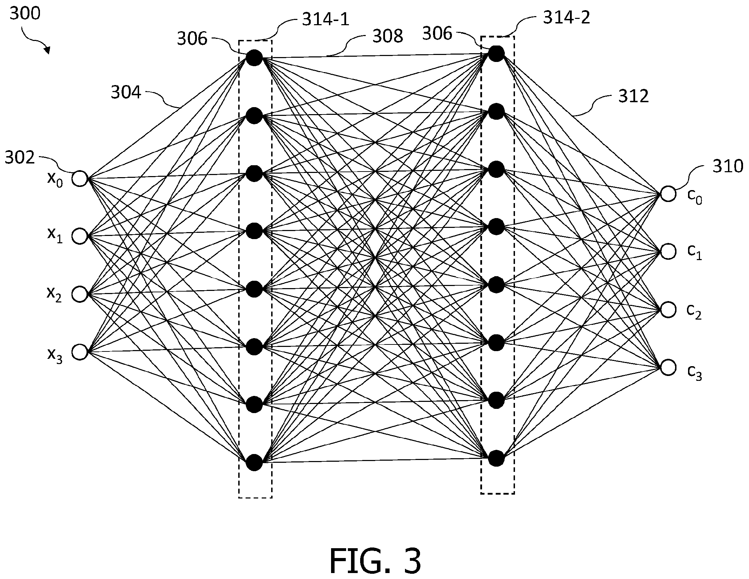

FIG. 3 illustrates a neural network 300, according to an exemplary embodiment. The neural network 300 may comprise a plurality of input nodes 302, intermediate nodes 306, and output nodes 310. The input nodes 302 being connected via links 304 to one or more intermediate nodes 306. Some intermediate nodes 306 may be respectively connected via links 308 to one or more adjacent intermediate nodes 306. Some intermediate nodes 306 may be connected via links 312 to output nodes 310. Links 304, 308, 312 illustrate inputs/outputs to/from the nodes 302, 306, and 310 in accordance with equation 1 below. The intermediate nodes 306 may form an intermediate layer 314 of the neural network 300. In some embodiments, a neural network 300 may comprise a plurality of intermediate layers 314, intermediate nodes 306 of each intermediate layer 314 being linked to one or more intermediate nodes 306 of adjacent layers, unless an adjacent layer is an input layer (i.e., input nodes 302) or an output layer (i.e., output nodes 310). The two intermediate layers 314 illustrated may correspond to a hidden layer of neural network 300, however a hidden layer may comprise more or fewer intermediate layers 314 or intermediate nodes 306. Each node 302, 306, and 310 may be linked to any number of nodes, wherein linking all nodes together as illustrated is not intended to be limiting. For example, the input nodes 302 may be directly linked to one or more output nodes 310.

The input nodes 306 may receive a numeric value $x_i$ of a sensory input of a feature, i being an integer index. For example, $x_i$ may represent color values of an $i^{th}$ pixel of a color image. The input nodes 306 may output the numeric value $x_i$ to one or more intermediate nodes 306 via links 304. Each intermediate node 306 may be configured to receive a numeric value on its respective input link 304 and output another numeric value $k_{i,j}$ to links 308 following the equation 1 below:

$$k_{i,j} = a_{i,j}x_0 + b_{i,j}x_1 + c_{i,j}x_2 + d_{i,j}x_3 \ldots \qquad \text{(Eqn. 1)}$$

Index $i$ corresponds to a node number within a layer (e.g., $x_1$ denotes the first input node 302 of the input layer, indexing from zero). Index $j$ corresponds to a layer, wherein $j$ would be equal to one for the one intermediate layer 314-1 of the neural network 300 illustrated, however, $j$ may be any number corresponding to a neural network 300 comprising any number of intermediate layers 314. Constants a, b, c, and d represent weights to be learned in accordance with a training process. The number of constants of equation 1 may depend on a number of input links 304 to a respective intermediate node 306. In this embodiment, all intermediate nodes 306 are linked to all input nodes 302, however this is not intended to be limiting. Intermediate nodes 306 of the second (rightmost) intermediate layer 314-2 may output values $k_{i,2}$ to respective links 312 following equation 1 above. It is appreciated that constants a, b, c, d may be of different values for each intermediate node 306. Further, although the above equation 1 utilizes addition of inputs multiplied by respective learned coefficients, other operations are applicable, such as convolution operations, thresholds for input values for producing an output, and/or biases, wherein the above equation is intended to be illustrative and non-limiting.

Output nodes 310 may be configured to receive at least one numeric value $k_{i,j}$ from at least an $i^{th}$ intermediate node 306 of a final (i.e., rightmost) intermediate layer 314. As illustrated, for example, each output node 310 receives numeric values $k_{0-7,2}$ from the eight intermediate nodes 306 of the second intermediate layer 314-2. The output of the output nodes 310 may comprise a classification of a feature of the input nodes 302. The output $c_i$ of the output nodes 310 may be calculated following a substantially similar equation as equation 1 above (i.e., based on learned weights and inputs from connections 312). Following the above example where inputs $x_i$ comprise pixel color values of an RGB image, the output nodes 310 may output a classification $c_i$ of each input pixel (e.g., pixel i is a car, train, dog, person, background, soap, or any other classification). Other outputs of the output nodes 310 are considered, such as, for example, output nodes 310 predicting a temperature within an environment at a future time based on temperature measurements provided to input nodes 302 at prior times and/or at different locations.

The training process comprises providing the neural network 300 with both input and output pairs of values to the input nodes 302 and output nodes 310, respectively, such that weights of the intermediate nodes 306 may be determined. An input and output pair comprise a ground truth data input comprising values for the input nodes 302 and corresponding correct values for the output nodes 310 (e.g., an image and corresponding annotations or labels). The determined weights configure the neural network 300 to receive input to input nodes 302 and determine a correct output at the output nodes 310. By way of illustrative example, annotated (i.e., labeled) images may be utilized to train a neural network 300 to identify objects or features within the image based on the annotations and the image itself, the annotations may comprise, e.g., pixels encoded with "cat" or "not cat" information if the training is intended to configure the neural network 300 to identify cats within an image. The unannotated images of the training pairs (i.e., pixel RGB color values) may be provided to input nodes 302 and the annotations of the image (i.e., classifications for each pixel) may be provided to the output nodes 310, wherein weights of the intermediate nodes 306 may be adjusted such that the neural network 300 generates the annotations of the image based on the provided pixel color values to the input nodes 302. This process may be repeated using a substantial number of labeled images (e.g., hundreds or more) such that ideal weights of each intermediate node 306 may be determined. The training process is complete upon predictions made by the neural network 300 falls below a threshold error rate which may be defined using a cost function.

As used herein, a training pair may comprise any set of information provided to input and output of the neural network 300 for use in training the neural network 300. For example, a training pair may comprise an image and one or more labels of the image (e.g., an image depicting a cat and a bounding box associated with a region occupied by the cat within he image).

Neural network 300 may be configured to receive any set of numeric values representative of any feature and provide an output set of numeric values representative of the feature. For example, the inputs may comprise color values of a color image and outputs may comprise classifications for each pixel of the image. As another example, inputs may comprise numeric values for a time dependent trend of a parameter (e.g., temperature fluctuations within a building measured by a sensor) and output nodes 310 may provide a predicted value for the parameter at a future time based on the observed trends, wherein the trends may be utilized to train the neural network 300. Training of the neural network 300 may comprise providing the neural network 300 with a sufficiently large number of training input/output pairs comprising ground truth (i.e., highly accurate) training data. As a third example, audio information may be provided to input nodes 302 and a meaning of the audio information may be provided to output nodes 310 to train the neural network 300 to identify words and speech patterns.

Generation of the sufficiently large number of input/output training pairs may be difficult and/or costly to produce. Accordingly, most contemporary neural networks 300 are configured to perform a certain task (e.g., classify a certain type of object within an image) based on training pairs provided, wherein the neural networks 300 may fail at other tasks due to a lack of sufficient training data and other computational factors (e.g., processing power). For example, a neural network 300 may be trained to identify cereal boxes within images, however the same neural network 300 may fail to identify soap bars within the images.

As used herein, a model may comprise of the weights of intermediate nodes 306 and output nodes 310 learned during a training process. The model may be analogous to a neural network 300 with fixed weights (e.g., constants a, b, c, d of equation 1), wherein the values of the fixed weights are learned during the training process. A trained model, as used herein, may include any mathematical model derived based on a training of a neural network 300. One skilled in the art may appreciate that utilizing a model from a trained neural network 300 to perform a function (e.g., identify a feature within sensor data from a robot 102) utilizes significantly less computational recourses than training of the neural network 300 as the values of the weights are fixed. This is analogous to using a predetermined equation to solve a problem as compared to determining the equation itself based on a set of inputs and results.

According to at least one non-limiting exemplary embodiment, one or more outputs $k_{i,j}$ from intermediate nodes 306 of a $j^{th}$ intermediate layer 312 may be utilized as inputs to one or more intermediate nodes 306 an $m^{th}$ intermediate layer 312, wherein index $m$ may be greater than or less than $j$ (e.g., a recurrent or feed forward neural network). According to at least one non-limiting exemplary embodiment, a neural network 300 may comprise N dimensions for an N dimensional feature (e.g., a 3-dimensional input image or point cloud), wherein only one dimension has been illustrated for clarity. One skilled in the art may appreciate a plurality of other embodiments of a neural network 300, wherein the neural network 300 illustrated represents a simplified embodiment of a neural network to illustrate the structure, utility, and training of neural networks and is not intended to be limiting. The exact configuration of the neural network used may depend on (i) processing resources available, (ii) training data available, (iii) quality of the training data, and/or (iv) difficulty or complexity of the classification/problem. Further, programs such as AutoKeras, utilize automatic machine learning ("AutoML") to enable one of ordinary skill in the art to optimize a neural network 300 design to a specified task or data set.

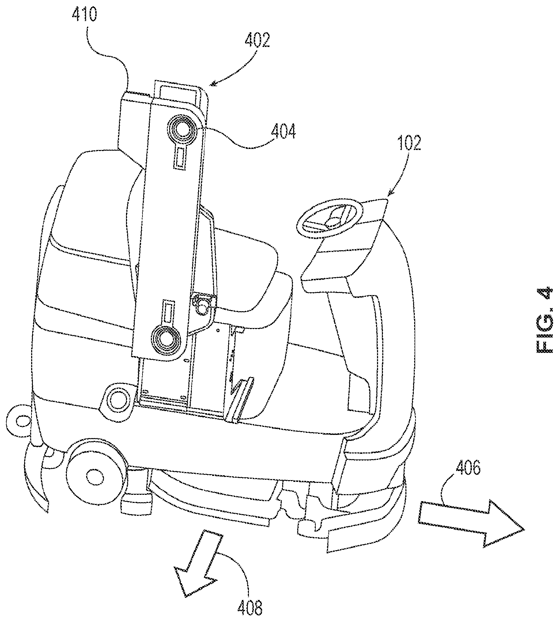

FIG. 4 illustrates a robot 102 configured to scan for features within an environment, according to an exemplary embodiment. The robot 102, outlined in dashed lines, in this embodiment is a floor cleaning robot 102 configured to scrub/clean floors as it navigates over them, however the robot 102 may be any robot of any functionality and is not intended to be limited to floor-cleaning devices. Attached to the robot 102 is a scanning device 402 comprising one or more cameras 404 configured to capture images of objects and features as the robot 102 navigates along a forward direction 406, wherein the one or more cameras 404 are oriented along direction 408 at an approximately 90° angle from the forward direction 406 of the robot 102. This allows for the robot 102 to navigate straight while the scanning device 402 captures images of objects as the robot 102 drives past them.

Images captured by the scanning device 402 may be communicated to a neural network 300 such that features within the images may be identified by the neural network 300. The neural network 300 may be embodied within computer readable instructions executed by the controller 118 of the robot 102. In some embodiments, the neural network 300 may be embodied within computer readable instructions executed by a processing device 138 of a server 202, wherein images captured by the scanning device 402 are transmitted to the server 202 prior to the neural network 300 identifying features within the images. As used herein, use of a neural network 300 to identify features within images is intended to be an exemplary method of image-feature identification, wherein one skilled in the art may appreciate other methods of feature identification which do not utilize neural networks 300. For example, image libraries, comprising a plurality of images of various features, may be compared to a given input image to determine similarities, wherein the similarities may indicate the presence of a feature within the image. That is, any applicable feature identification method of this disclosure may also/alternatively be used in addition to or in lieu of a neural network 300.

Due to the scanning device 402 being oriented along direction 408, the robot 102 is only able to capture images of objects which are on the right-hand side of the robot 102. This constrains the possible directions the robot 102 may take when imaging an object, as will be discussed later. It is appreciated that the orientation of the scanning device 402 on the right-hand side is not intended to be limiting, wherein the scanning device 402 may be oriented on the left-hand side. In some embodiments, the scanning device 402 may be oriented along or opposite to the direction 406 (i.e., behind the robot 102), wherein directional constraints are not needed to be considered when planning routes for the robot 102.

According to at least one non-limiting exemplary embodiment, the scanning device 402 may further comprise an additional camera 410 oriented upwards in order to capture images of tall objects, such as tall shelves in a warehouse. The additional camera 410 may be oriented in the same direction, opposite direction, or another direction than the direction of cameras 404.

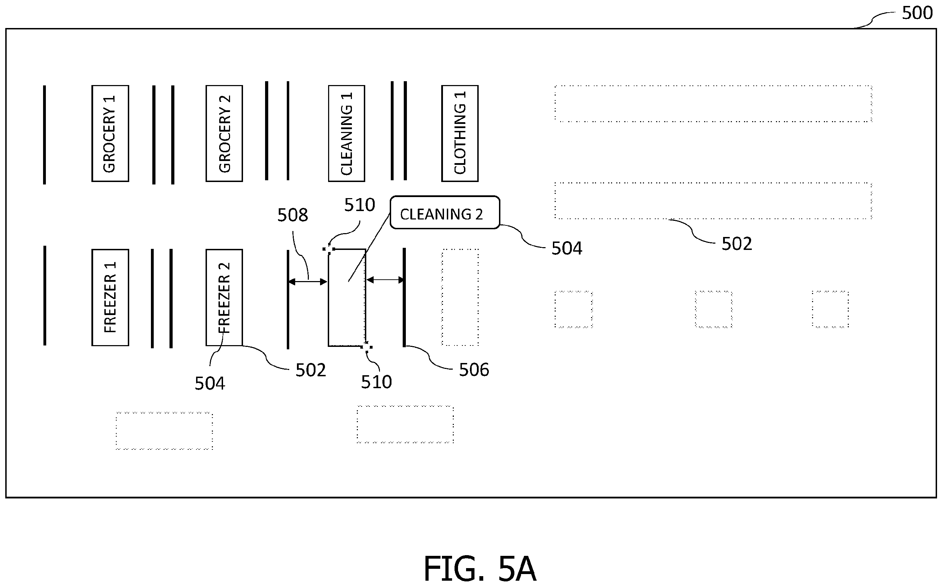

FIG. 5A illustrates a computer readable map 500 being annotated, according to an exemplary embodiment. The map 500 may be produced via a robot 102 navigating around its environment and collecting data from sensor units 114 to produce the map 500 based on locations of various detected objects 502. In some instances, the map 500 may comprise a combination of multiple computer readable maps aggregated together. For example, a first robot 102 may navigate a first portion of the environment and a second robot 102 may navigate the remaining portion, wherein the two maps may be aligned together to produce the map 500. The second robot 102 may also be the first robot 102 navigating the remaining portion at an earlier/later time than the first portion. The alignment may be performed via overlaying objects 502 sensed in both the first and second portions of the environment using, for example, iterative closest point ("ICP") and/or scan matching algorithms. In some instances, the map 500 is downloaded from another robot 102 (e.g., using communications unit 116) or from a server 202.

According to at least one non-limiting exemplary embodiment, the map 500 may be produced and annotated following at least in part the disclosure of co-owned and copending U.S. provisional application No. 63/191,719 entitled "SYSTEMS AND METHODS FOR CONFIGURING A ROBOT TO SCAN FOR FEATURES WITHIN AN ENVIRONMENT".

The computer readable map 500 may be displayed on a user interface, such as user interface units 112 of the robot 102 or a user interface of a device 208 coupled to the server 202, wherein the map 500 is communicated to the server 202 before being displayed on the device 208. The user interface may receive user inputs 510, which define regions occupied by the objects 502 detected in the environment as described above. The inputs 510 may comprise clicks with a mouse, taps on a touch screen, and/or other forms of receiving user input to denote a location on the map 500. The two inputs 510 shown may represent two mouse clicks, which define the opposing corners of a rectangle, wherein the rectangle encompasses an object 502. In some embodiments, the user may click/tap and drag to draw the rectangle. In some embodiments, the user may be provided with a free-form shape tool to allow them to draw non-rectangular shapes, such as L-shapes, U-shapes, and/or circles to define the boundaries of the objects 502, which were sensed previously and placed on the map 500.

According to at least one non-limiting exemplary embodiment, entire objects may be selected and automatically assigned a perimeter to be annotated. Objects on the map 500 are represented with pixels comprising a certain encoding to denote the area of those pixels is occupied by an object, whereas other pixels may also denote free space and/or unmapped space. For instance, the user may click anywhere within the areas occupied by the objects 502, wherein the controller 118 may select all object pixels representing the object 502 (which should all be surrounded by free or unmapped space in order to define the perimeter).

Once the area for each object 502 is defined via inputs 510, annotations 504 may be added thereto. The annotations may comprise a name for the object 502 such as, for example, "Grocery N", "Cleaning N", and so forth if the environment is a grocery store, wherein N represents an integer. In the illustrated instance, the user is providing an annotation of "Cleaning 2" to the selected rectangle. It is appreciated that the words used to annotate the objects 502 are not intended to be limited to those shown in FIGS. 5A-B, wherein the user may input any text as the label. Preferably, the text should be human readable such that a human may readily understand which object 502 the annotation 504 corresponds to for reasons discussed below. Once the annotation 504 is provided to the selected region, the user may be prompted to denote which sides of the region are to be scanned for features. Each face or side of the annotated regions may comprise a face ID, or identifier, which denotes each face of the annotated regions. Each face ID may denote (i) if the face of the object should be scanned, and (ii) scanning parameters for scanning the face of the object 502.

Scanning parameters, as used herein, refer to a set of parameters, which enable the robot 102 to accurately image features of objects 502. Scanning parameters may include, for example, speed of the robot 102, focal length of the cameras 404, which camera(s) 404 should be enabled for each object 502, and/or a distance 508 the robot 102 should be at in order to capture high quality images, and/or any hardware states (e.g., disabling a scrubbing brush which may cause vibrations which blur captured images).

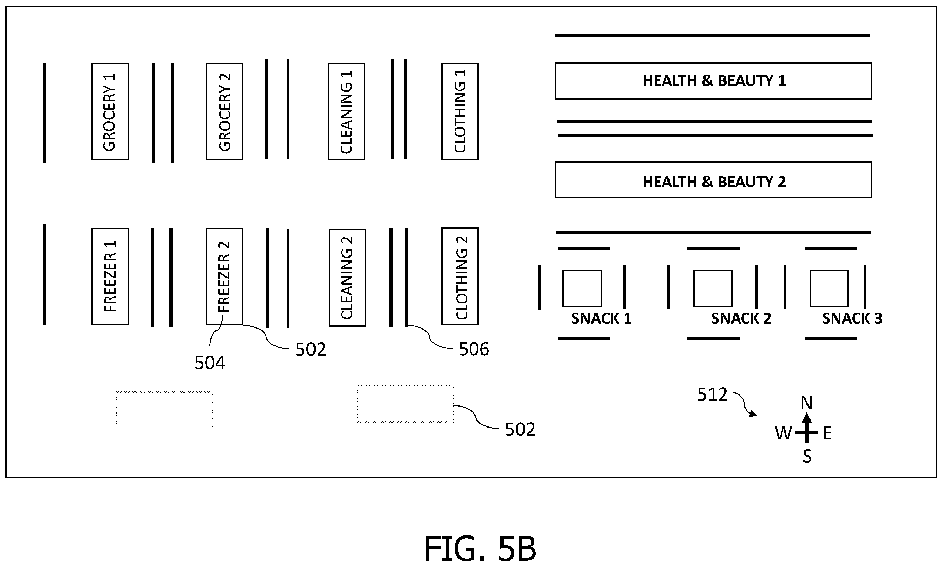

The scanning parameters may indicate a preferred scanning line 506, which runs parallel to the surfaces of the rectangular annotations of the objects 502 at a constant distance 508, the distance 508 being specified by the scanning parameters. FIG. 5B illustrates the same computer readable map 500 with all desired objects 502 annotated, according to the exemplary embodiment. As shown, each object 502 now comprises an annotation 504. Further, each scannable surface of each annotated object 502 corresponds to a preferred scanning segment 506. Some objects 502 are left unannotated, indicating these objects 502 are not to be scanned for features (e.g., objects 502 may be cash registers).

Cardinal directions 512 are placed onto the map 500 to provide the user with defined directions. Cardinal directions 512 may be aligned arbitrarily, randomly, based on user input (e.g., the user may rotate the directions 512), and/or based on magnetic north (e.g., as measured by a magnetometer of sensor units 112). Alternatively, cardinal directions may be aligned to the store orientation (front, back, etc.) rather than a compass direction.

The cardinal directions 512 denote which side of an object 502 a respective preferred scanning segment 506 is. For example, Grocery 1 includes a West and East side, Health and Beauty 1 includes a North and a South side, and Clothing 1 and 2 only include a West side. It is appreciated that, for some embodiments, not all objects 502 are oriented at 90° angles with respect to each other, wherein cardinal directions 512 may not always perfectly align with the direction of a preferred scanning segment 506. Accordingly, the direction assigned to each preferred scanning segment 506 may be based on whichever cardinal direction 512, which best aligns with the direction of the preferred scanning segment 506 with respect to its corresponding object 502. In some embodiments, the direction may be denoted using intercardinal directions, such as North West, South East, etc. or any angles from "North" from 0 to 359°. The cardinal direction for each scannable side of the objects 502 may be corresponding with the respective face ID.

According to at least one non-limiting exemplary embodiment, each face of the annotated objects 502 may be annotated using unique names based on the cardinal directions 512. For example, the west side of Grocery 1 may comprise a first face ID corresponding to the west side (e.g., "grocery 1 west") and a second face ID corresponding to the east side. That is, for each scannable face of the annotated objects 502, the user may be required to input an annotation 504 for each scannable face manually, wherein the annotations 504 corresponds to the respective face ID. In other embodiments, the denotation of a "North/South/West/East" direction may be provided automatically by the controller 118 for each scannable face of each annotated object 502.

It is appreciated that use of cardinal directions is just one exemplary form of delineating the different scannable faces of a single object 502. Other schemes are considered without limitation such as alphabetical (e.g., Grocery 2A), numerical (e.g., Grocery 2.1), and/or other semantics.

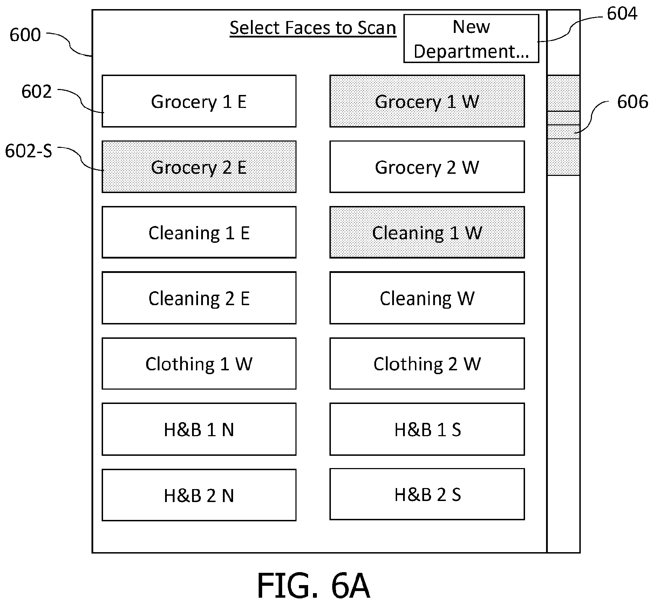

Once the annotated map 500 is produced, the robot 102 may be able to autonomously navigate routes within the environment to scan the annotated objects 502. FIG. 6A illustrates a user interface 600 displayed to a robot operator to enable the robot operator to automatically generate a route for the robot 102 to execute, according to an exemplary embodiment. The user interface may prompt the operator to select one or more sections 602 to scan. An option 604 may be displayed on the interface 600 to allow the user to add new sections 602 via providing a new annotation to the map 500, as described above. The interface 600 may provide a scroll bar 606 (or page selector or other equivalent) to allow the operator to view and select their desired sections 602 to be scanned for features. Each section 602 corresponds to a scanning segment 506 of map 500, which in turn corresponds to an annotation 504 of an object 502.

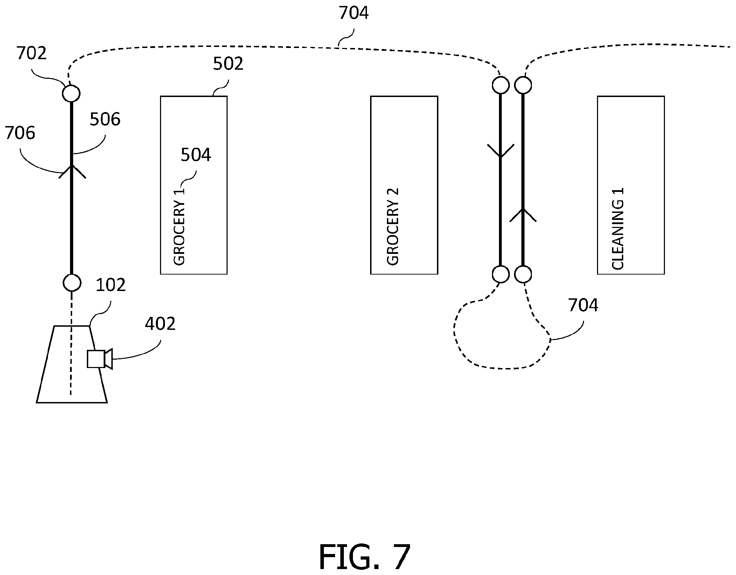

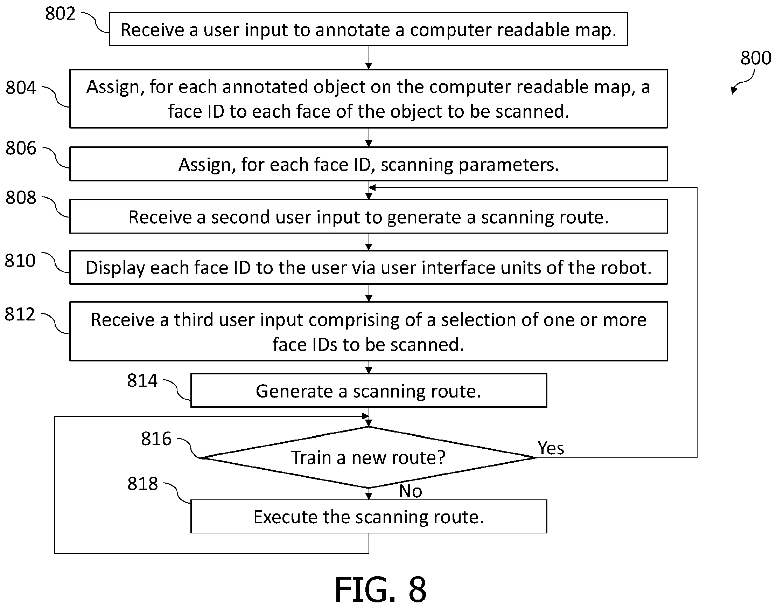

The user may, in this embodiment, desire to scan three sections 602-S: Grocery 1 W (West), Grocery 2 E (East), and Cleaning 1 W, as shown by these section options 602-S being highlighted in grey. In other instances, the user may select more or fewer sections 602 to be scanned. Once the sections 602-S to be scanned are specified on interface 600, the controller 118 of the robot 102 may execute method 800 described in FIG. 8 below and illustrated in FIG. 7 next to automatically generate a new route to scan these selected sections 602-S.

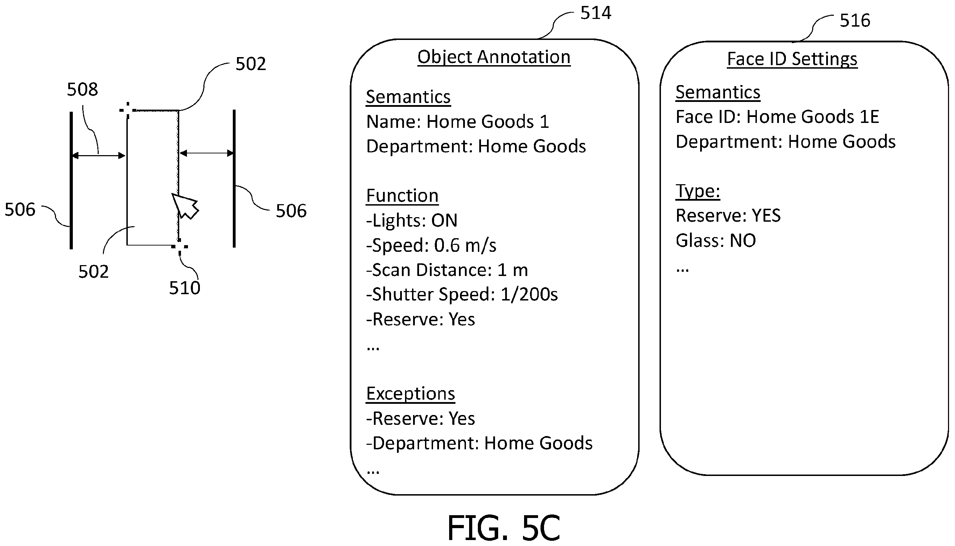

FIG. 5C further details exemplary user dialogue boxes 514, 516, which enable a user to annotate an object 502 on a map 500, according to an exemplary embodiment. Dialogue boxes 514, 516 may be displayed on a user interface of the robot 102 and/or a user interface of a device 208 coupled to a server 202, whichever device is receiving user input to annotate the map 500.

Following the user providing selections 510 to define the size/shape of the object 502, the user may be prompted to fill in the dialogue box 514. There are three main categories in the "Object Annotation" dialogue box: (i) semantic labels, (ii) functional constraints, and (iii) exception data. Semantic labels are human-readable text used to denote the object in a recognizable way to a human who is, e.g., viewing the map 500 and/or reviewing an inventory report following feature scanning (e.g., item X was detected in "Home Goods 1" of the "Home Goods" department). The name refers to the name of the object 502, and the department comprises of a higher-level abstraction of the environment, which may encompass a plurality of annotated objects 502. In some instances, the department name may correspond to names of departments provided by the environment, such as in a store catalog or inventory database.

Semantic labels, as discussed above, enable human understanding of location information for detected features. That is, for instance, a human reviewer noticing a certain feature/item is within "home goods 1" would immediately understand the spatial context of where the feature/item is without needing to reference the computer readable map produced by the robot 102. Each image captured by the robot 102 during scanning of an annotated object may be encoded or appended with metadata indicating the object annotation information 514. This correlation between the annotation information 514 and each image captured by the robot 102 enables correspondence between items detected and physical locations in the environment with additional context (e.g., department or display names). Additionally, the robot 102 location during capture of each image may also be communicated to the server 202 and encoded/appended to each captured image. Such location information may yield more precise localization of each detected feature and may also be utilized, in some embodiments, to determine which department/display/object 502 the detected feature is located on.

The second aspect of the object annotation 514 are functional constraints applied to the robot 102 to enable high quality imaging of the features. Some of the parameters may not be changeable, such as camera shutter speed, distance to the object 502, and/or robot 102 max speed, while others are based on the object being scanned, such as lights being on or off. The user may be requested to select each scannable face of the annotated object 502 to set such parameters. For instance, one side of an object 502 in a supermarket may comprise glass doors while the other does not. Accordingly, the user may desire to select one face (e.g., the eastern/right face in FIG. 5C) to denote such face does not contain glass, as shown in dialogue box 516. Advantageously, the user is still able to configure the other side of the object 502 (i.e., Home Goods 1E) to be scanned as though glass doors are present, causing the lights to be disabled. Another exemplary type is shown comprising reserve storage. As discussed briefly in FIG. 4, some scanning devices 402 may contain additional cameras 410 configured to image reserve storage located above normal storage/sales floors. To minimize redundant and/or useless data collected by the robot 102, such as images of reserve storage when no reserve storage is present, the additional camera 410 may be disabled when not needed. Accordingly, each face ID can be further configured to denote if reserve storage is present, thereby effecting the functional aspect of the object annotation 514 as shown.

Lastly, exception data is utilized in the reporting of the features detected. Exception data is utilized generally as a filter nonsensical data. For instance, detecting reserve pallets where one should not be, or vice versa to indicate out of stock. As another example, the department can be utilized to determine if an item is misplaced if, e.g., the item is detected in/by another object 502 with a different department object annotation 514.

According to at least one non-limiting exemplary embodiment, an object 502 may be provided with two different annotations. For instance, the left side of object 502 may comprise grocery items whereas the right side may comprise home good items. The user may either: (i) draw two rectangles via inputs 510, provide both the "grocery" and "home goods" semantic labels/departments, and only provide settings for one face ID (e.g., west side for grocery, east side for home goods); or (ii) provide two semantic labels in the object annotation 514 based on providing two different face ID settings 516 to both the grocery and home goods side.

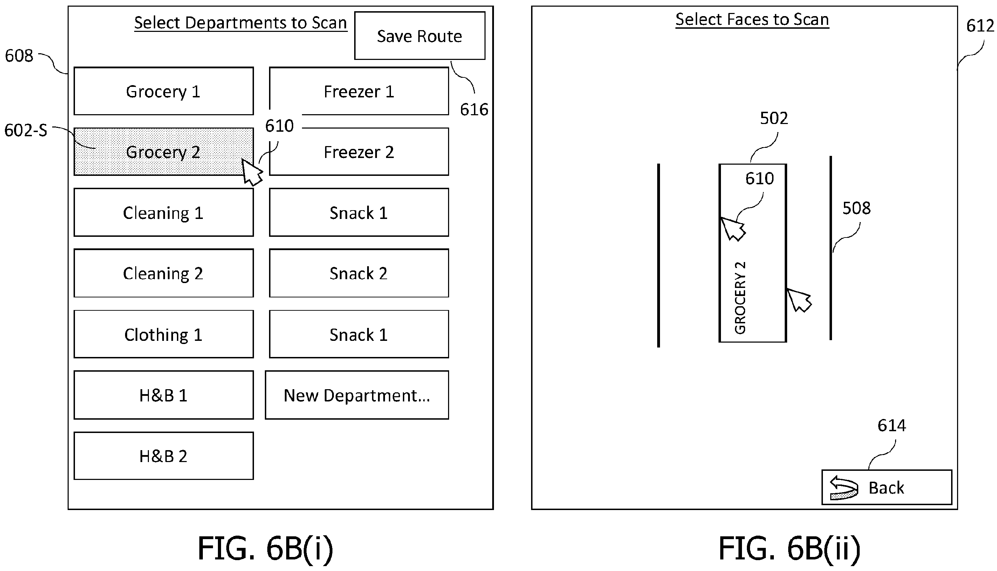

FIG. 6B(i-ii) illustrate another exemplary user interface 608 used to configure a robot 102 to produce a route, according to an exemplary embodiment. First, in FIG. 6B(i) each annotated object 502 is displayed using the corresponding annotation in plaintext. Unlike user interface 600, which lists each scannable face ID, user interface 608 lists each object 502 with its corresponding annotation 504. The user, represented by a mouse pointer 610 (which may also represent a touch-screen input in some embodiments), may select a department 602-S. In this example, Grocery 2 is selected. Following the user selection, the interface may display interface 612 shown in FIG. 6B(ii). Interface 612 displays a portion of the computer readable map 500, which includes Grocery 2. In some embodiments, only the object 502 corresponding to the selected department 602-S is displayed, and all other objects 502 are removed from view for clarity. The user may then, via pointer 610, select each face to be scanned. In this embodiment as illustrated, Grocery 2 includes two scannable faces on its left- and right-hand sides. In other embodiments, the department may further include endcap displays on the upper and lower ends of the illustrated object 502. Accordingly, the user may click/tap/select the faces to be scanned which, in this embodiment, are both the left and right sides.

Once the faces to be scanned are selected, preferred scanning segments 508 may be displayed. The preferred scanning segments 508 may be placed at a predetermined distance from the object 502 or at distances specified by the user. In some instances, the user may further specify scanning parameters other than distance to the object 502 associated with the preferred scanning segments 508 if default values are undesirable. For example, the user may disable any lights to remove glare when imaging freezer sections, wherein by default the lights may be on. In other embodiments, such hardware parameters are configured automatically based on the annotation itself specifying such conditions (e.g., using preset annotation encodings such as "normal shelf/display", "glass door", "reserve storage", etc.). Once the faces to be scanned are selected and the preferred scanning segments 508 are configured, the user may select the back button 614 to return to the user interface 608, wherein the controller 118 may record any selections, edits and parameters set by the user with regard to the selected section 602-S and save them to memory 120. In some embodiments, the user may be prompted to save or discard any changes made upon selecting the back button 614. The user may then repeat the process for each department 602 displayed on interface 608 to be scanned. Once all departments and faces thereof to be scanned are identified, the user may select the "Save Route" 616 option to save the route in memory 120, which causes the controller 118 to generate the route in accordance with the selected departments, as described in methods 800 and 900 in FIG. 8-9 below. At a later time, e.g., responsive to a user input to execute a route, the controller 118 may recall the generated route and execute it autonomously.

According to at least one non-limiting exemplary embodiment, the scanning device 402 may comprise one or more actuator units configured to reposition the one or more cameras 404 thereof such that the cameras 404 are oriented towards the selected scannable face of a selected object 502. Accordingly, any directional requirements mentioned above in FIG. 4, with regards to the rightward-facing scanning device 402, may be ignored when planning a route following methods 800, 900 discussed below.

Although the plurality of face ID's enable rapid selection and generation of a custom designed scanning route, that is not to limit the possible ways to configure a robot 102 to scan for features. For instance, some robots 102 may learn by way of demonstration and repetition, wherein the robot 102 is driven, pushed, or moved through a path it should recreate autonomously. In such training scheme, the human user may likely not navigate perfectly along the preferred scanning segments when demonstrating the route, which, if recreated as demonstrated, may cause a degradation in scanning performance. Accordingly, in such training scheme, the robot 102 may be configured to scan for features when it is proximate to, i.e., within a threshold distance from, an annotated object 502. Additionally, when approaching within a threshold distance to the object 502, the robot 102 may deviate from the trained path and follow the preferred scanning segment 506 (assuming no other obstacles obstruct the path) and, upon completing the segment 506, return to the trained path.

Although the present disclosure is largely focused on leveraging annotated maps to generate routes for scanning, one skilled in the art may appreciate that such a computer readable map labeled with human-understandable semantic information and robot functional constraints may be utilized for other applications. For instance, robot 102 may be a floor-cleaning robot with no feature scanning capabilities. The semantic map may still be utilized, however the annotations provided could be instead denoting areas to be cleaned rather than objects to be scanned. The annotations may further define similar functional requirements (e.g., perimeters to fill, path segments to follow, specific areas to avoid/prefer, max speed, scrub deck state (on/off/speed/pressure) based on floor type, etc.). Semantic labels provide the same utility for floor care as feature scanning in that a human, with no advanced training in operating the robot 102, may immediately understand the result of commanding the robot to clean "sales floor 1", an area which may be defined on the map by a different, more skilled operator who is familiar with the limitations of the robot 102. As another example, a robot 102 may be designed to transport items between various locations. Environments with, say, 6 drop-off and pick-up points may comprise 15 different possible route combinations. Rather than train 15 different routes, the user may simply annotate the six locations on a map, wherein an unskilled user may leverage the semantic map to immediately recognize where they are sending the robot 102 to upon selecting an option 602 displaying one of the six locations. The users may further be able to adjust the settings of the six locations to define the location as, for example, a drop-off only location, a pick-up only location, automatic pick-up/drop-off, a wait for a new payload from an operator/other robot 102, a wait for an operator to take its current payload, and so forth. To summarize, annotations denote regions on a computer readable map used by a robot 102 which enable (i) human understanding of the space (via the semantic labels), and (ii) a plurality of user-defined robotic functions which enable new routes/tasks to be rapidly generated without additional training or programming.

FIG. 7 illustrates the robot 102, comprising a scanning device 402, producing and executing a route 704, which includes selected departments 602-S, according to an exemplary embodiment. To determine the route 704, the controller 118 may first determine endpoints 702 for each preferred scanning segment 706 which corresponds to the selected departments 602-S. These endpoints 702 may define segments of the route 704 which the robot 102 must navigate. The segments 702 are called "preferred" scanning segments because, absent any objects/obstacles, the robot 102 should navigate the segments 702 exactly, however, unexpected objects may block the segments 702 causing the robot 102 to deviate from the segments 702 slightly. Thus, it is preferred the robot 102 navigate as close to segments 702, however some environmental scenarios may inhibit the ability of the robot 102 to navigate the preferred scanning segments 702 perfectly.

The endpoints 702 provide rough constraints on the route 704 of the robot 102, wherein controller 118 may utilize other motion planning algorithms to determine a path which connects the endpoints 702 of two scanning segments 506 together. The controller 118 may connect the preferred scanning segments 506 in any order, however the controller 118 will select the shortest route to execute. Further, the controller 118 must, in some embodiments where the scanning device 402 is directional, consider the direction of travel of the robot 102. Since in the illustrated non-limiting embodiment the scanning device 402 comprises cameras oriented rightward, the robot 102 must travel upward in FIG. 7 to capture images on its right-hand side, and vice-versa for the left-hand side. Accordingly, directional requirements 706 may be determined which further constrains the order in which the controller 118 may connect the selected scanning segments 706. In the illustrated embodiment, based on the starting position of the robot 102 as illustrated, the shortest route 704 comprises navigating through Grocery 1 West, then proceeding downward through Grocery 2 East, performing a U-turn, and navigating through Cleaning 1 West. In other instances, such as when the robot 102 begins to the right of Cleaning 1 object 502, the order in which the robot 102 passes through each department may be reversed or rearranged. In some embodiments, the robot 102 may return to its starting position or other known/predetermined location after scanning the selected departments 602-S or may continue executing other scheduled tasks.

FIG. 8 is a process flow diagram illustrating a method 800 for a controller 118 of a robot 102 to automatically generate a scanning route, according to an exemplary embodiment. It is appreciated that steps of method 800 are effectuated by the controller 118 executing computer readable instructions from a memory 120.

Block 802 includes the controller 118 receiving a user input, via user interface units 112, to annotate a computer readable map. The computer readable map may be produced at an earlier time and/or by a different robot 102. The map may be produced using data collected by sensor units 114 of the robot 102 while the robot 102 navigates around the environment autonomously (e.g., via executing one or more predetermined routes or exploring its environment) or under manual control.

Once the user input is received, the controller 118 may continue to receive user inputs to annotate objects on the computer readable map, as shown and described in FIGS. 5A-B above. Each annotation for the objects comprises a name, or text string, provided by the user and defines a region around an object on the computer readable map.

Each face or edge of the region may be automatically assigned a unique face ID in block 804 by the controller 118. The face ID allows the controller 118 to identify each face of each annotated object uniquely.

Block 806 includes the controller 118 assigning scanning parameters for each face ID associated with a scannable object face. The scanning parameters may be specified for each scannable face of the annotated regions, wherein the scanning parameters denote if the face of the annotated regions should be scanned for features and the distance the robot 102 should maintain to capture high quality images of the scannable faces. That is, the scanning parameters denote at least the distance between a scannable face and its respective preferred scanning segments 508. The scanning parameters may further include a maximum speed of the robot 102 and/or other hardware states, such as the brightness of lights if additional lights are present in the scanning device 402. Typically, default values for the maximum speed of the robot 102 and the distance between objects and their corresponding preferred scanning segments 508 are widely applicable for most objects 502 to be scanned, assuming the intrinsic camera 404 parameters remain constant. However, the user may, if so desired, adjust the scanning parameters as they deem best for their environment. For example, if an object 502 includes a shelf with small objects or barcodes to be resolved, the user may move the preferred scanning segment 506 closer to the object 502.

In some embodiments, multiple default settings may be available for each face ID and corresponding preferred scanning segment 506. For example, a "glass" default may be used to image objects 502 behind glass, such as freezer sections in grocery stores. The "glass" settings may disable lights from the scanning device 402. Other default settings, such as "shelf" for example, may be similar to the "glass" default setting with the lights enabled. As a final example, "upper steel" settings may be used to indicate when and where the robot 102 should utilize an upper steel camera 410 to image an object 502. There may be any number of default settings as appreciated by one skilled in the art. These default settings may be selected using, for example user interface 612 shown in FIG. 6B(ii) above.

According to at least one non-limiting exemplary embodiment, updates to the intrinsic camera 404 parameters (e.g., focal length) of the scanning device 402 may cause automatic changes to the scanning parameters of the preferred scanning segments 508. In some instances, installation of a new different camera 404 (e.g., as an upgrade) may necessitate automatic and/or manual changes to the scanning parameters.

According to at least one non-limiting exemplary embodiment, the steps executed in blocks 802-806 may be executed by a processing device 138 of a server 202 communicatively coupled to the robot 102. The server 202 may receive the computer readable map from the robot 102 via communications unit 116 prior to executing method 800. A device 208, such as a personal computer, may comprise a user interface configured to receive the user inputs discussed in blocks 802-806. After the map has been annotated, the server 202 may communicate the annotated map to the robot 102.

Block 808 includes the controller 118 receiving a second user input to generate a scanning route. The second user input, provided to the user interface units 112 of the robot 102, may comprise a selection from a list of behaviors of the robot 102. For example, the robot 102 may be capable of operating in manual mode, executing a predetermined route, learning a new route (e.g., via user demonstration in manual mode), and automatically generating scanning routes, wherein the second user input comprises a selection from the list of robot behaviors indicating the robot 102 should generate a scanning route.

Block 810 includes the controller 118 displaying each face ID to the user via the user interface 112. The display may appear similar to the interface 600 shown and described in FIG. 6A above.

Block 812 includes the controller 118 receiving a third user input, in which the third user input comprises a selection of one or more face IDs to be scanned. Selecting a face ID to be scanned corresponds to having the robot 102 navigate a corresponding preferred scanning segment 506 associated with an annotated object. The user may click, tap, or otherwise select which scanning segments 506 to navigate to in order to scan for features using, for example, user interfaces 600, 608, 612 shown in FIG. 6A-B above. The user may select one or more options, followed by selecting a "generate route" or similar option on the interface 600.

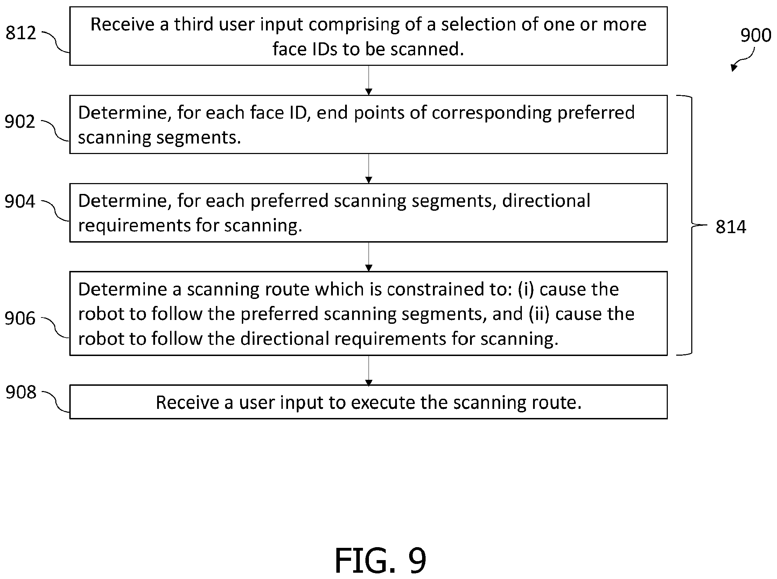

Block 814 includes the controller 118 generating a scanning route. The process executed by the controller 118 to generate the route is further described in FIG. 7 above and FIG. 9 below.

Block 816 includes the controller 118 determining if a new route should be trained. Following the generation of the route in block 814, the controller 118 may prompt the user (e.g., via user interface units 112) to either train/generate another new route, cause the robot 102 to execute the generated route, or other functions. If a new route does not need to be trained, the controller can move to block 118.

Block 818 includes the controller 118 executing the scanning route autonomously. The route may be initiated following input from the user, wherein the user selects the route to be navigated by the robot 102. In some instances, execution of the scanning route may be done following generation of the scanning route, such as after receiving a user input to execute the route. In some instances, execution of the route may begin automatically, e.g., on a predetermined schedule. In some instances, execution of the route may occur at a time later than the rest of method 800 was executed. In some instances, the robot 102 may be turned off and stored for later use rather than immediately executing the generated route. While executing the scanning route, the robot 102 will utilize a scanning device 402 to capture images of objects when the robot 102 is navigating along or nearby a preferred scanning segment 506 specified by the second user input.

FIG. 9 is a process flow diagram illustrating a method 900 for a controller of a robot 102 to generate a scanning route in accordance with block 814 of method 800 described in FIG. 8 above, according to an exemplary embodiment. It is appreciated that steps of method 900 are effectuated by the controller 118 executing computer readable instructions from a memory 120. Method 900 begins after block 812 of method 800 described above, wherein the third user input is received on user interface units 112. The third input selects one or more face IDs to be scanned for features.

Block 902 includes the controller 118 determining, for each face ID selected by the third user input, end points 702 for preferred scanning segments 506 corresponding to each face ID. The preferred scanning segments 506 denote paths for the robot 102 to follow in order to scan an object for features. The preferred scanning segments 506 denote a speed, direction, and distance from the object 502 the robot 102 should maintain for optimal imaging of the object 502 (i.e., high resolution images free from blur). The end points 702 may be stored as pairs of coordinates the robot 102 should navigate between during the scanning route. The end points 702 constrain the route to include navigation of the robot 102 between each pair of end points 702. The end points 702 form a segment parallel to the corresponding face ID and, for flat faces, of approximately the same length. Curved surfaces may comprise preferred scanning segments which are still in parallel with (differentials of the) segment, however they may be larger in length (e.g., surrounding a circular object) or smaller in length (e.g., within a concave object).

In some embodiments, the preferred scanning segment further denotes hardware states for the robot 102 to maintain during the scanning. For example, the robot 102 may include an extendable gripper arm to grasp objects. While scanning for features (i.e., navigating along a preferred scanning segment 506 of a selected object/face ID 602-S to be scanned) the hardware state of the robotic arm may be constrained to avoid having the arm be within the field of view of cameras 404 of the scanning device 402, and when the robot 102 is not moving along a selected preferred scanning segment the arm is unconstrained. As another example, the robot 102 may comprise a floor scrubbing robot, wherein disabling the scrubbing pads may reduce vibrations during imaging thereby reducing blur in images. One skilled in the art may appreciate other hardware states which may be modified to improve image quality of the images captured by the scanning device 402 which may be specific to the robot 102 and the tasks it is capable of performing. As described above, other hardware states may relate to states of the scanning device 402.

Block 904 includes the controller 118 determining, for each preferred scanning segment 506, directional requirements for scanning. Directional requirements, as discussed above, refer to the direction of travel 406 the robot 102 must take in order to capture images of objects corresponding to each preferred scanning segment 506. In the exemplary embodiment shown in FIG. 4, the scanning device 402 captures images on the right-hand side of the robot 102, along direction 408 perpendicular to the direction of travel 406. Accordingly, in order to image an object, the robot 102 must travel in a direction such that the object is on its right-hand side. In other embodiments, the scanning device 402 may be on the left-hand side. The directional requirements further constrain the route by requiring the robot 102 to navigate between any pair of end points 702 along a specified direction.

According to at least one non-limiting exemplary embodiment, the scanning device 402 may be oriented along the forward direction 406 or opposite the forward direction 406 of the robot 102, wherein there is no directional requirements to be considered. That is, the robot 102 may capture images of an object while navigating along a preferred scanning segment 506 with the object on either its right- or left-hand side. In other embodiments, the scanning device 402 may include a 360°, or other wide field of view camera, wherein no directional requirements are considered.

Block 906 includes the controller 118 determining a scanning route 704. The scanning route 704 is constrained to: (i) cause the robot 102 to follow the preferred scanning segments 506, specified by the detected endpoints 702 in block 902; and (ii) cause the robot 102 to follow the directional requirements, determined in block 904 above, while navigating along the preferred scanning segments 506. These constraints, in addition to the robot 102 start position (and end position if one is specified), may define portions of the scanning route 704, wherein the controller 118 may calculate the remaining portions of the scanning route 704 to generate a complete scanning route 704. In some embodiments, the controller 118 may connect the one or more preferred scanning segments 506 in multiple different orders and select the shortest/fastest route combination as the scanning route 704. In some embodiments, the controller 118 may connect the one or more selected face IDs in the order in which the user selected them in block 812. Once the scanning route 704 is generated, the controller 118 may proceed to block 908 to execute the route once a user input is received which initiates the execution of the route, e.g., as described in block 818 above in FIG. 8. The user input may include a selection of the route, from a plurality of available routes, on the user interface units 112. In embodiments, the user input may also include a schedule for the controller to follow for executing the route.

Advantageously, methods 800 and 900 allow a robot 102 to generate customizable routes on the fly when an operator desires to have one or more departments scanned for features. The operator may configure the scanning routes based on a plurality of additional contextual factors the robot 102 may not be able to consider. For example, a human operator may determine that one portion of a store has a low amount of customers while the robot 102 is navigating elsewhere, wherein it is desirable to scan for features within the portion. Accordingly, the human may command the robot 102 to navigate to the portion of the store to scan for features. In other instances, the human operator may cause the robot 102 to skip departments which are currently being stocked, repaired, reorganized, and/or for any other reason.

According to at least one non-limiting exemplary embodiment, after generating a scanning route based on a user selection of one or more departments 602-S to be scanned, the controller 118 may utilize user interface units 112 to prompt the user to save the route. Saving the route may cause the controller 118 to store the generated path such that, at a later time, the same route may be executed by the robot 102. That is, in addition to generating single-use routes, the same route generation method of this disclosure may be utilized to train a robot 102 to learn multiple routes.

**Claims**

1.  A method (800, 900) for route generation for a robotic device, comprising:

    providing a computer readable map produced by a robotic device (102) to at least one user device;
    receiving (802) from the at least one user device (208) one or more annotations (504) to a respective object (502) on the computer readable map, the one or more annotations define at least in part functions of the robotic device at certain locations on the computer readable map, the one or more annotations to the computer readable map produce an annotated map (500);
    communicating the annotated map to the robotic device;
    wherein, the robotic device navigates (818) a route in accordance with the functions defined by at least one respective annotation of the one or more annotations, **characterized in that**:

    the at least one respective annotation comprises a region on the map, a semantic label, and one or more functional constraints,
    each annotated object comprises at least one face identification, ID, corresponding to a face of the object to be scanned for features, and

    the one or more functional constraints comprise preferred scanning segments, the preferred scanning segments are portions of navigable path for the robotic device to follow while scanning for features;

    the method further comprising:

    receiving a plurality of face IDs from either the user device (208) or the robotic device (102);
    identifying corresponding preferred scanning segments (506) for each face ID; and
    generating (814) a route encompassing the corresponding preferred scanning segments for the plurality of face IDs selected by connecting the preferred scanning segments.

2.  The method (800, 900) of Claim 1, further comprising:
    constraining the route generation based on a directional requirement for scanning, the directional requirement indicates the direction along the preferred scanning segment (506) for the robotic device (102) to navigate.

3.  The method (800, 900) of claim 1 comprising selecting (812), by a user, the plurality of face IDs through a user interface (112).

4.  The method (800, 900) of claim 1 comprising detecting a feature of the face scanned for features.

5.  A robotic system for route generation for a robotic device, comprising:

    a server (202) in communications with at least one robotic device (102) and at least one user device (208);
    a processor (118) configured to execute computer readable instructions stored on a memory to:

    provide a computer readable map produced by the at least one robotic device to the at least one user device;
    receive one or more annotations (504) to a respective object (502) on the computer readable map, the one or more annotations define at least in part functions of the robotic device at certain locations on the computer readable map, the one or more annotations to the computer readable map produce an annotated map (500);
    communicate the annotated map to the robotic device; and
    navigate the robotic device a route in accordance with the functions defined by at least one respective annotation of the one or more annotations, **characterized in that**:

the at least one respective annotation comprises a region on the map, a semantic label, and one or more functional constraints;

each annotated object comprises at least one face identification, ID, corresponding to a face of the object to be scanned for features;

the one or more functional constraints comprise preferred scanning segments (506), the preferred scanning segments are portions of navigable path for the robotic device to follow while scanning for features; and

the processor is further configured to execute the computer readable instructions to:

receive a plurality of face IDs from either the user device or the robotic device;

identify corresponding preferred scanning segments for each face ID; and

generate a route encompassing the corresponding preferred scanning segments for the plurality of face IDs selected by connecting the preferred scanning segments.

6. The robotic system of Claim 5, wherein the processor (118) is further configured to execute the computer readable instructions to:

constrain the route generation based on a directional requirement for scanning, the directional requirement indicates the direction along the preferred scanning segment (506) for the robotic device (102) to navigate.

7. The system of claim 5 comprising selecting, by a user, the plurality of face IDs through a user interface (112).

8. The system of claim 5 comprising detecting a feature of the face scanned for features.

9. A non-transitory computer readable storage medium comprising computer-readable instructions stored thereon which, when executed by at least one processor (118), configure the at least one processor to:

provide a computer readable map produced by a robotic device (102) to at least one user device (208);

receive from the at least one user device one or more annotations (504) to a respective object (502) on the computer readable map, the one or more annotations define at least in part functions of the robotic device at certain locations on the computer readable map, the one or more annotations to the computer readable map produce an annotated map(500);

communicate the annotated map to the robotic device; and

navigate a route in accordance with the functions defined by at least one respective annotation of the one or more annotations, **characterized in that**:

the at least one respective annotation comprises a region on the map, a semantic label, and one or more functional constraints,

each annotated object comprises at least one face identification, ID, corresponding to a face of the object to be scanned for features;

the one or more functional constraints comprise preferred scanning segments (506), the preferred scanning segments are portions of navigable path for the robotic device to follow while scanning for features; and

the at least one processor is further configured to execute the computer readable instructions to:

receive a plurality of face IDs from either the user device or the robotic device;

identify corresponding preferred scanning segments for each face ID; and

generate a route encompassing the corresponding preferred scanning segments for the plurality of face ID's selected by connecting the preferred scanning segments.

10. The non-transitory computer readable storage medium of Claim 9, wherein the at least one processor (118) is further configured to execute the computer readable instructions to:

constrain the route generation based on a directional requirement for scanning, the directional requirement indicates the direction along the preferred scanning segment for the robot (102) to navigate.

11. The medium of claim 9 comprising selecting, by a user, the plurality of face IDs through a user interface (112).

12. The medium of claim 9 comprising detecting a feature of the face scanned for features.

**Patentansprüche**

1. Verfahren (800, 900) zur Routenerzeugung für eine Robotervorrichtung, umfassend:

   Bereitstellen einer rechnerlesbaren Karte, die von einer Robotervorrichtung (102) erzeugt wird, an mindestens eine Benutzervorrichtung;
   Empfangen (802) von einer oder mehreren Anmerkungen (504) zu einem jeweiligen Objekt (502) auf der rechnerlesbaren Karte von der mindestens einen Benutzervorrichtung (208), wobei die eine oder mehrere Anmerkungen mindestens teilweise Funktionen der Robotervorrichtung an bestimmten Orten auf der rechnerlesbaren Karte definieren, wobei die eine oder mehrere Anmerkungen zur rechnerlesbaren Karte eine annotierte Karte (500) erzeugen;
   Übermitteln der annotierten Karte an die Robotervorrichtung;
   wobei die Robotervorrichtung (818) auf einer Route gemäß den Funktionen navigiert, die durch mindestens eine jeweilige Anmerkung der einen oder mehreren Anmerkungen definiert sind, **dadurch gekennzeichnet, dass**:

      die mindestens eine jeweilige Anmerkung einen Bereich auf der Karte, eine semantische Beschriftung und eine oder mehrere funktionale Einschränkungen umfasst,
      jedes annotierte Objekt mindestens eine Flächenidentifikation, ID, umfasst, die einer Fläche des Objekts entspricht, das auf Merkmale gescannt werden soll, und

      die eine oder mehrere funktionale Einschränkungen bevorzugte Scansegmente umfassen, wobei die bevorzugten Scansegmente Abschnitte eines navigierbaren Pfads sind, dem die Robotervorrichtung beim Scannen nach Merkmalen folgen soll;

   wobei das Verfahren ferner umfasst:

      Empfangen mehrerer Flächen-IDs entweder von der Benutzervorrichtung (208) oder der Robotervorrichtung (102);
      Identifizieren entsprechender bevorzugter Scansegmente (506) für jede Flächen-ID; und
      Erzeugen (814) einer Route, die die entsprechenden bevorzugten Scansegmente für die Vielzahl von durch Verbindung der bevorzugten Scansegmente ausgewählten Flächen-IDs umfasst.

2. Verfahren (800, 900) nach Anspruch 1, ferner umfassend:
   Einschränken der Routenerzeugung basierend auf einer Richtungsanforderung für das Scannen, wobei die Richtungsanforderung die Richtung entlang des bevorzugten Scansegments (506) angibt, auf dem die Robotervorrichtung (102) navigieren soll.

3. Verfahren (800, 900) nach Anspruch 1, umfassend das Auswählen (812) der mehreren Flächen-IDs durch einen Benutzer über eine Benutzeroberfläche (112).

4. Verfahren (800, 900) nach Anspruch 1, umfassend das Erkennen eines Merkmals der auf Merkmale gescannten Fläche.

5. Robotersystem zur Routenerzeugung für eine Robotervorrichtung, umfassend:

   einen Server (202) in Kommunikation mit mindestens einer Robotervorrichtung (102) und mindestens einer Benutzervorrichtung (208);
   einen Prozessor (118), der so konfiguriert ist, dass er rechnerlesbare Anweisungen ausführt, die in einem Speicher gespeichert sind, um:

      eine rechnerlesbare Karte bereitzustellen, die von der mindestens einen Robotervorrichtung an die mindestens eine Benutzervorrichtung erzeugt wird;
      eine oder mehrere Anmerkungen (504) zu einem jeweiligen Objekt (502) auf der rechnerlesbaren Karte zu empfangen, wobei die eine oder mehrere Anmerkungen zumindest teilweise Funktionen der Robotervorrichtung an bestimmten Orten auf der rechnerlesbaren Karte definieren, wobei die eine oder mehrere Anmerkungen zur rechnerlesbaren Karte eine annotierte Karte (500) erzeugen;
      die annotierte Karte an die Robotervorrichtung zu übermitteln; und
      die Robotervorrichtung auf einer Route gemäß den Funktionen zu navigieren, die durch mindestens eine jeweilige Anmerkung der einen oder mehreren Anmerkungen definiert sind, **dadurch gekennzeichnet, dass**:

die mindestens eine jeweilige Anmerkung einen Bereich auf der Karte; eine semantische Beschriftung und eine oder mehrere funktionale Einschränkungen umfasst;

jedes annotierte Objekt mindestens eine Flächenidentifikation, ID, umfasst, die einer Fläche des Objekts entspricht, das auf Merkmale gescannt werden soll;

die eine oder mehrere funktionale Einschränkungen bevorzugte Scansegmente (506) umfassen, wobei die bevorzugten Scansegmente Abschnitte eines navigierbaren Pfads sind, dem die Robotervorrichtung beim Scannen nach Merkmalen folgen soll; und

der Prozessor ferner konfiguriert ist, um die rechnerlesbaren Anweisungen auszuführen, um:

mehrere Flächen-IDs entweder von der Benutzervorrichtung oder der Robotervorrichtung zu empfangen;

entsprechende bevorzugte Scansegmente für jede Flächen-ID zu identifizieren; und

eine Route zu erzeugen, die die entsprechenden bevorzugten Scansegmente für die Vielzahl von ausgewählten Flächen-IDs umfasst, indem die bevorzugten Scansegmente verbunden werden.

6. Robotersystem nach Anspruch 5, wobei der Prozessor (118) ferner so konfiguriert ist, dass er die rechnerlesbaren Anweisungen ausführt, um:

die Routenerzeugung basierend auf einer Richtungsanforderung für das Scannen einzuschränken, wobei die Richtungsanforderung die Richtung entlang des bevorzugten Scansegments (506) angibt, auf dem die Robotervorrichtung (102) navigieren soll.

7. System nach Anspruch 5, umfassend das Auswählen der mehreren Flächen-IDs durch einen Benutzer über eine Benutzeroberfläche (112).

8. System nach Anspruch 5, umfassend das Erkennen eines Merkmals der auf Merkmale gescannten Fläche.

9. Nicht vorübergehendes rechnerlesbares Speichermedium, das darauf gespeicherte rechnerlesbare Anweisungen umfasst, die, wenn sie von mindestens einem Prozessor (118) ausgeführt werden, den mindestens einen Prozessor so konfigurieren, dass er:

eine rechnerlesbare Karte, die von einer Robotervorrichtung (102) erzeugt wird, an mindestens eine Benutzervorrichtung (208) bereitstellt;

von der mindestens einen Benutzervorrichtung eine oder mehrere Anmerkungen (504) zu einem jeweiligen Objekt (502) auf der rechnerlesbaren Karte empfängt, wobei die eine oder mehrere Anmerkungen mindestens teilweise Funktionen der Robotervorrichtung an bestimmten Orten auf der rechnerlesbaren Karte definieren, wobei die eine oder mehrere Anmerkungen zur rechnerlesbaren Karte eine annotierte Karte (500) erzeugen;

die annotierte Karte an die Robotervorrichtung zu übermitteln; und

auf einer Route gemäß den Funktionen navigiert, die durch mindestens eine jeweilige Anmerkung der einen oder mehrere Anmerkungen definiert sind, **dadurch gekennzeichnet, dass**:

die mindestens eine jeweilige Anmerkung einen Bereich auf der Karte, eine semantische Beschriftung und eine oder mehrere funktionale Einschränkungen umfasst,

jedes annotierte Objekt mindestens eine Flächenidentifikation, ID, umfasst, die einer Fläche des Objekts entspricht, das auf Merkmale gescannt werden soll;

die eine oder mehrere funktionale Einschränkungen bevorzugte Scansegmente (506) umfassen, wobei die bevorzugten Scansegmente Abschnitte eines navigierbaren Pfads sind, dem die Robotervorrichtung beim Scannen nach Merkmalen folgen soll; und

der mindestens eine Prozessor ferner so konfiguriert ist, dass er die rechnerlesbaren Anweisungen ausführt, um:

mehrere Flächen-IDs entweder von der Benutzervorrichtung oder der Robotervorrichtung zu empfangen;

entsprechende bevorzugte Scansegmente für jede Flächen-ID zu identifizieren; und

eine Route zu erzeugen, die die entsprechenden bevorzugten Scansegmente für die Vielzahl von ausgewählten Flächen-IDs umfasst, indem die bevorzugten Scansegmente verbunden werden.

**10.** Nicht vorübergehendes rechnerlesbares Speichermedium nach Anspruch 9, wobei der mindestens eine Prozessor (118) ferner so konfiguriert ist, dass er die rechnerlesbaren Anweisungen ausführt, um:
die Routenerzeugung basierend auf einer Richtungsanforderung für das Scannen einzuschränken, wobei die Richtungsanforderung die Richtung entlang des bevorzugten Scansegments angibt, auf dem der Roboter (102) navigieren soll.

**11.** Medium nach Anspruch 9, umfassend das Auswählen der mehreren Flächen-IDs durch einen Benutzer über eine Benutzeroberfläche (112).

**12.** Medium nach Anspruch 9, umfassend das Erkennen eines Merkmals der auf Merkmale gescannten Fläche.

**Revendications**

**1.** Procédé (800, 900) de génération d'itinéraire pour un dispositif robotique, comprenant :

la fourniture d'une carte lisible par ordinateur produite par un dispositif robotique (102) à au moins un dispositif utilisateur ;
la réception (802) par l'au moins un dispositif utilisateur (208) d'une ou plusieurs annotations (504) vers un objet (502) respectif sur la carte lisible par ordinateur, les une ou plusieurs annotations définissent au moins en partie des fonctions du dispositif robotique à certains emplacements sur la carte lisible par ordinateur, les une ou plusieurs annotations sur la carte lisible par ordinateur produisent une carte annotée (500) ;
la communication de la carte annotée au dispositif robotique ;
dans lequel le dispositif robotique navigue (818) sur un itinéraire conformément aux fonctions définies par au moins une annotation respective des une ou plusieurs annotations, **caractérisé en ce que** :

l'au moins une annotation respective comprend une région sur la carte, une étiquette sémantique, et une ou plusieurs contraintes fonctionnelles,
chaque objet annoté comprend au moins une identification de face, ID, correspondant à une face de l'objet dont les caractéristiques doivent être balayées, et

les une ou plusieurs contraintes fonctionnelles comprennent des segments de balayage préférés, les segments de balayage préférés sont des portions de chemin navigable que le dispositif robotique doit suivre pendant le balayage de caractéristiques ;

le procédé comprenant en outre :

la réception d'une pluralité d'ID de face provenant soit du dispositif utilisateur (208), soit du dispositif robotique (102) ;
l'identification de segments de balayage préférés correspondants (506) pour chaque ID de face ; et
la génération (814) d'un itinéraire englobant les segments de balayage préférés correspondants pour la pluralité d'ID de face sélectionnés en reliant les segments de balayage préférés.

**2.** Procédé (800, 900) selon la revendication 1, comprenant en outre :
le fait de contraindre la génération d'itinéraire sur la base d'une exigence directionnelle de balayage, l'exigence directionnelle indique la direction le long du segment de balayage préféré (506) pour la navigation du dispositif robotique (102).

**3.** Procédé (800, 900) selon la revendication 1 comprenant la sélection (812), par un utilisateur, de la pluralité d'ID de face par l'intermédiaire d'une interface utilisateur (112).

**4.** Procédé (800, 900) selon la revendication 1 comprenant la détection d'une caractéristique de la face ayant subi un balayage de caractéristiques.

**5.** Système robotique de génération d'itinéraire pour un dispositif robotique, comprenant :

un serveur (202) en communication avec au moins un dispositif robotique (102) et au moins un dispositif utilisateur (208) ;

un processeur (118) configuré pour exécuter des instructions lisibles par ordinateur stockées dans une mémoire pour :

fournir une carte lisible par ordinateur produite par l'au moins un dispositif robotique à l'au moins un dispositif utilisateur;

recevoir une ou plusieurs annotations (504) vers un objet (502) respectif sur la carte lisible par ordinateur, les une ou plusieurs annotations définissent au moins en partie des fonctions du dispositif robotique à certains emplacements sur la carte lisible par ordinateur, les une ou plusieurs annotations sur la carte lisible par ordinateur produisent une carte annotée (500) ;

communiquer la carte annotée au dispositif robotique ; et

faire naviguer le dispositif robotique sur un itinéraire selon les fonctions définies par au moins une annotation respective des une ou plusieurs annotations, **caractérisé en ce que** :

l'au moins une annotation respective comprend une région sur la carte, une étiquette sémantique et une ou plusieurs contraintes fonctionnelles ;

chaque objet annoté comprend au moins une identification de face, ID, correspondant à une face de l'objet dont les caractéristiques doivent être balayées ;

les une ou plusieurs contraintes fonctionnelles comprennent des segments de balayage préférés (506), les segments de balayage préférés sont des portions de chemin navigable que le dispositif robotique doit suivre pendant le balayage de caractéristiques ; et

le processeur est en outre configuré pour exécuter les instructions lisibles par ordinateur pour :

recevoir une pluralité d'ID de face en provenance soit du dispositif utilisateur soit du dispositif robotique ;

identifier des segments de balayage préférés correspondants pour chaque ID de face ; et

générer un itinéraire englobant les segments de balayage préférés correspondants pour la pluralité d'ID de face sélectionnés en reliant les segments de balayage préférés.

6. Système robotique selon la revendication 5, dans lequel le processeur (118) est en outre configuré pour exécuter les instructions lisibles par ordinateur pour :
contraindre la génération d'itinéraire sur la base d'une exigence directionnelle de balayage, l'exigence directionnelle indique la direction le long du segment de balayage préféré (506) pour la navigation du dispositif robotique (102).

7. Système selon la revendication 5 comprenant la sélection, par un utilisateur, de la pluralité d'ID de face par l'intermédiaire d'une interface utilisateur (112).

8. Système selon la revendication 5 comprenant la détection d'une caractéristique de la face ayant subi un balayage de caractéristiques.

9. Support de stockage non transitoire lisible par ordinateur comprenant des instructions lisibles par ordinateur qui y sont stockées et qui, lorsqu'elles sont exécutées par au moins un processeur (118), configurent l'au moins un processeur pour :

fournir une carte lisible par ordinateur produite par un dispositif robotique (102) à au moins un dispositif utilisateur (208) ;

recevoir de l'au moins un dispositif utilisateur une ou plusieurs annotations (504) vers un objet (502) respectif sur la carte lisible par ordinateur, les une ou plusieurs annotations définissent au moins en partie des fonctions du dispositif robotique à certains emplacements sur la carte lisible par ordinateur, les une ou plusieurs annotations sur la carte lisible par ordinateur produisent une carte annotée (500) ;

communiquer la carte annotée au dispositif robotique ; et

naviguer sur un itinéraire selon les fonctions définies par au moins une annotation respective des une ou plusieurs annotations, **caractérisé en ce que** :

l'au moins une annotation respective comprend une région sur la carte, une étiquette sémantique, et une ou plusieurs contraintes fonctionnelles,

chaque objet annoté comprend au moins une identification de face, ID, correspondant à une face de l'objet dont les caractéristiques doivent être balayées ;

les une ou plusieurs contraintes fonctionnelles comprennent des segments de balayage préférés (506), les segments de balayage préférés sont des portions de chemin navigable que le dispositif robotique doit suivre pendant le balayage de caractéristiques ; et

l'au moins un processeur est en outre configuré pour exécuter les instructions lisibles par ordinateur pour :

recevoir une pluralité d'ID de face en provenance soit du dispositif utilisateur soit du dispositif robotique ;

identifier des segments de balayage préférés correspondants pour chaque ID de face ; et

générer un itinéraire englobant les segments de balayage préférés correspondants pour la pluralité d'ID de face sélectionnés en reliant les segments de balayage préférés.

10. Support de stockage non transitoire lisible par ordinateur selon la revendication 9, dans lequel l'au moins un processeur (118) est en outre configuré pour exécuter les instructions lisibles par ordinateur pour :

contraindre la génération d'itinéraire sur la base d'une exigence directionnelle de balayage, l'exigence directionnelle indique la direction le long du segment de balayage préféré pour la navigation du robot (102).

11. Support selon la revendication 9 comprenant la sélection, par un utilisateur, de la pluralité d'ID de face par l'intermédiaire d'une interface utilisateur (112).

12. Support selon la revendication 9 comprenant la détection d'une caractéristique de la face ayant subi un balayage de caractéristiques.

FIG. 1A

EP 4 423 583 B1

FIG. 1B

FIG. 2

FIG. 3

FIG. 4

FIG. 5A

EP 4 423 583 B1

FIG. 5B

**Object Annotation** — 514

Semantics
Name: Home Goods 1
Department: Home Goods

Function
-Lights: ON
-Speed: 0.6 m/s
-Scan Distance: 1 m
-Shutter Speed: 1/200s
-Reserve: Yes

...

Exceptions
-Reserve: Yes
-Department: Home Goods
...

**Face ID Settings** — 516

Semantics
Face ID: Home Goods 1E
Department: Home Goods

Type:
Reserve: YES
Glass: NO

...

## FIG. 5C

EP 4 423 583 B1

FIG. 6A

EP 4 423 583 B1

Select Departments to Scan

608

Save Route

Grocery 1

Freezer 1

616

602-S

610

Grocery 2

Freezer 2

Cleaning 1

Snack 1

Cleaning 2

Snack 2

Clothing 1

Snack 1

H&B 1

New Department...

H&B 2

**FIG. 6B(i)**

Select Faces to Scan

612

502

610

GROCERY 2

508

614

Back

**FIG. 6B(ii)**

FIG. 7

EP 4 423 583 B1

802 — | Receive a user input to annotate a computer readable map. |

800

804 — | Assign, for each annotated object on the computer readable map, a face ID to each face of the object to be scanned. |

806 — | Assign, for each face ID, scanning parameters. |

808 — | Receive a second user input to generate a scanning route. |

810 — | Display each face ID to the user via user interface units of the robot. |

812 — | Receive a third user input comprising of a selection of one or more face IDs to be scanned. |

814 — | Generate a scanning route. |

816 — ◇ Train a new route? ◇ — Yes

818 — No

| Execute the scanning route. |

# FIG. 8

812 — Receive a third user input comprising of a selection of one or more face IDs to be scanned.

900

902 — Determine, for each face ID, end points of corresponding preferred scanning segments.

904 — Determine, for each preferred scanning segments, directional requirements for scanning.

814

906 — Determine a scanning route which is constrained to: (i) cause the robot to follow the preferred scanning segments, and (ii) cause the robot to follow the directional requirements for scanning.

908 — Receive a user input to execute the scanning route.

FIG. 9

**REFERENCES CITED IN THE DESCRIPTION**

**Patent documents cited in the description**

- CN 110281236 A
- US 20210018912 A1
- US 63191719